(19) Europäisches Patentamt
European Patent Office
Office européen des brevets

(11) **EP 4 534 433 A2**

(12) **EUROPÄISCHE PATENTANMELDUNG**

(43) Veröffentlichungstag:
**09.04.2025   Patentblatt 2025/15**

(21) Anmeldenummer: **25159650.8**

(22) Anmeldetag: **05.07.2023**

(51) Internationale Patentklassifikation (IPC):
**B65D 30/20** *(2006.01)*

(52) Gemeinsame Patentklassifikation (CPC):
**B65D 31/08; B65D 31/04; B65D 31/10**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(62) Dokumentnummer(n) der früheren Anmeldung(en) nach Art. 76 EPÜ:
**23183739.4 / 4 488 191**

(71) Anmelder: **Papier-Mettler KG**
**54497 Morbach (DE)**

(72) Erfinder:
• **Donner, Georg**
  **54497 Morbach (DE)**
• **Hornberg, Marcel**
  **54497 Morbach (DE)**

(74) Vertreter: **Metten, Karl-Heinz**
**Boehmert & Boehmert**
**Anwaltspartnerschaft mbB**
**Pettenkoferstrasse 22**
**80336 München (DE)**

Bemerkungen:
Diese Anmeldung ist am 24.02.2025 als Teilanmeldung zu der unter INID-Code 62 erwähnten Anmeldung eingereicht worden.

(54) **KUNSTSTOFFTRAGETASCHE**

(57)   Die vorliegende Erfindung betrifft ein Kunststofftragetasche (1), bei der die Innenlagen (28, 32) wie auch die Außenlagen (30, 34) von Vorder- und Rückwand (6, 8) jeweils einstückig ausgebildet sind und mittels Umschlagens ineinander übergehen, insbesondere unter Ausbil-dung einer Bodenfalte, wobei sich die Ausdehnung von Vorder- und Rückwand (6, 8) zwischen dem jeweiligen ersten und zweiten Seitenrand (10, 12, 10', 12') im Bereich (114) des unteren Drittels in Richtung des und insbesondere bis zum Übergang (16) verjüngt (auch "Verjüngungs-/Bodenflächenbereich" genannt), wobei die seitliche Ausdehnung der ersten und der zweiten Seitenwand (102, 104) im Verjüngungs-/Bodenflächenbereich (114) korrespondierend zu dem Bereich, in dem sich die Ausdehnung von Vorder- und Rückwand (6, 8) verjüngt, jeweils in entsprechender Weise abnimmt, wobei die erste und die zweite Seitenwand (102, 104) im Verjüngungs-/Bodenflächenbereich (114) im Bereich ihrer ersten Seitenränder (116) mit der Vorderwand (6) und im Bereich der zweiten Seitenränder (118) mit der Rückwand (8) verschweißt sind.

*Fig. 1*

**Beschreibung**

Die vorliegende Erfindung betrifft eine, insbesondere vielfach wiederverwendbare und recycelbare, Kunststofftragetasche.

Kunststofftragetaschen sind gegenüber Tragetaschen aus Papiermaterial regemäßig dann ausA ökologischer und ökonomischer Sicht von Vorteil, wenn sie häufig wiederverwendbar und ohne weiteres recycelbar sind. Wiederverwendbare Kunststofftragetaschen haben besonderen Stabilitätskriterien zu genügen, zumal sie häufig größer dimensioniert und an Vorder- und Rückwand mit Trageschlaufen versehen sind. Herkömmliche Schlaufentaschen finden sich beispielsweise in der DE 10116 920 A1, der WO 01/51372 A1 und der DE 40 12 897 A1 beschrieben. Diesen Schlaufentaschen des Stands der Technik mangelt es regelmäßig an hinreichender mechanischer Stabilität für das wiederholte Tragen schwerer Lasten.

In manchen Fällen hat es sich als schwierig erwiesen, insbesondere die steigende Nachfrage nach größer dimensionierten wiederverwendbaren Kunststofftragetaschen mittels im Wesentlichen automatisierter Massenfertigungsprozesse zu befriedigen und zusätzlich die sehr hohen Anforderungen von gewerblichen Abnehmern von Schlaufentragetaschen wie Kaufhäusern und Großmarktketten an die Qualität solcher Taschen zu erfüllen.

Der vorliegenden Erfindung lag daher die Aufgabe zugrunde, Tragetaschen aus Kunststoff, insbesondere großdimensionierte wiederverwendbare Kunststofftragetaschen, zur Verfügung zu stellen, die nicht mit den Nachteilen der Tragetaschen des Stands der Technik behaftet sind und die insbesondere für den wiederholten zuverlässigen Transport auch schwerer Lasten geeignet sind und die sich zudem auf einfache und kostengünstige Weise in maschineller Serienfertigung herstellen lassen.

Demgemäß wurde eine Kunststofftragetasche gefunden mit einem Bodenende und einem gegenüberliegenden Öffnungsende, umfassend eine Vorderwand und eine Rückwand, jeweils mit einem ersten Seitenrand und einem gegenüberliegenden zweiten Seitenrand sowie einem Öffnungsrand, sowie eine erste und eine gegenüberliegende zweite Seitenwand mit jeweils einem ersten und einem gegenüberliegenden zweiten Seitenrand, sowie mindestens eine mit der Vorderwand und/oder, insbesondere und, mindestens eine mit der Rückwand verbundene Halteschlaufe mit jeweils einem ersten und einem zweiten Anbindungsbereich, wobei die Vorder- und die Rückwand ein- oder mehrlagig, insbesondere doppellagig, ausgestaltet sind, umfassend mindestens eine innenliegende Lage, insbesondere eine Innenlage, und eine Außenlage, wobei die Vorder- und die Rückwand im Bereich des Öffnungsendes einen, insbesondere sich bis zum Öffnungsende erstreckenden oder dieses umfassenden, Verstärkungsbereich aufweist, enthaltend mindestens einen innen- oder außenseitig, insbesondere innenseitig, an der Vorderwand befestigten und mindestens einen innen- oder außenseitig, insbesondere innenseitig, an der Rückwand befestigten und sich jeweils von oder beabstandet von dem ersten Seitenrand in Richtung des oder bis zum zweiten Seitenrand erstreckenden ein- oder mehrlagigen, insbesondere doppellagigen, Kunststofffolienstreifen. Die vorangehend geschilderte erfindungsgemäße Kunststofftragetasche zeichnet sich dabei dadurch aus, dass die mindestens eine innenliegende Lage, insbesondere die Innenlage, der Vorderwand und die mindestens eine innenliegende Lage, insbesondere die Innenlage, der Rückwand einstückig ausgebildet sind, dass die Außenlagen von Vorder- und Rückwand einstückig ausgebildet sind und dass die Vorderwand und die Rückwand am Bodenende mittels Umschlagens ineinander übergehen, insbesondere in diesem Übergang eine Bodenfalte bilden, wobei der Übergang, insbesondere die Bodenfalte, sich lateral von einem ersten bis zu einem gegenüberliegenden zweiten Ende erstreckt, wobei bei bis zum Übergang, insbesondere der Bodenfalte, aneinander anliegender Vorder- und Rückwand (auch "stapelbarer Lagerzustand" genannt) die laterale Ausdehnung des Übergangs, insbesondere der Bodenfalte, zwischen dem ersten und zweiten Ende geringer ist als die laterale Ausdehnung der Vorder- und der Rückwand zwischen dem jeweiligen ersten und dem zweiten Seitenrand am Öffnungsende, wobei sich die Ausdehnung von Vorder- und Rückwand zwischen dem jeweiligen ersten und zweiten Seitenrand im Bereich des unteren Drittels, insbesondere des unteren Viertels, bezogen auf die Erstreckung zwischen Öffnungsende und Bodenende, in Richtung des und insbesondere bis zum Übergang, insbesondere zur Bodenfalte, verjüngt (auch "Verjüngungs-/Bodenflächenbereich" genannt), wobei die seitliche/laterale Ausdehnung der ersten und der zweiten Seitenwand im Verjüngungs-/Bodenflächenbereich korrespondierend zu dem Bereich, in dem sich die Ausdehnung von Vorder- und Rückwand zwischen dem jeweiligen ersten und zweiten Seitenrand verjüngt, jeweils, insbesondere in entsprechender Weise, abnimmt, wobei die erste Seitenwand im Verjüngungs-/Bodenflächenbereich im Bereich ihres ersten Seitenrandes mit der Vorderwand, insbesondere entlang deren erstem Seitenrand, und im Bereich des zweiten Seitenrands mit der Rückwand, insbesondere entlang deren erstem Seitenrand, verschweißt ist und wobei die zweite Seitenwand im Verjüngungs-/Bodenflächenbereich im Bereich ihres ersten Seitenrandes mit der Vorderwand, insbesondere entlang deren zweitem Seitenrand, und im Bereich des zweiten Seitenrands mit der Rückwand, insbesondere entlang deren zweitem Seitenrand, verschweißt ist.

Mit lateraler Ausdehnung im Sinne der Erfindung soll grundsätzlich die Breite der Seitenwände wie auch die Breite von Vorder- und Rückwand gemeint sein, mit anderen Worten, der Abstand zwischen den sich gegenüberliegenden Seitenrändern Seiten-, Vorder- und Rückwand. Die longitudinale Ausdehnung der erfindungsgemäßen Kunststofftragetasche erstreckt sich dementsprechend senkrecht hierzu zwischen dem Öffnungsende und dem Umschlag bzw. der Bodenfalte.

Die Darlegungen zur erfindungsgemäßen Kunststofftragetasche stellen, soweit nicht ausdrücklich abweichend ausgeführt, ab auf einen Zustand, in dem die Vorder- und Rückwand flach aneinander auf einer ebenen Unterlage anliegen. In diesem Zustand sind die erfindungsgemäßen Kunststofftragetaschen übereinander in einem flachen Zustand stapelbar. Dieser Zustand kann auch als "stapelbarer Lagerzustand" bezeichnet werden. Die Bodenfalte stellt bei den erfindungsgemäßen Kunststofftragetaschen im stapelbaren Lagerzustand besonders bevorzugt eine nach außen gerichtete Bodenfalte dar. Durch Auseinanderbewegen von Vorder- und Rückwand werden die Verjüngungs-/Bodenflächenbereiche von Vorder- und Rückwand Bestandteil der Bodenfläche, wodurch die erfindungsgemäße Kunststofftragetasche in einen aufgestellten Befüllungszustand übergeht. Bedingt durch den Umstand, dass diese Verjüngungs-/Bodenflächenbereiche von Vorder- und Rückwand im stapelbaren Lagerzustand in der Ebene von Vorder- bzw. Rückwand liegen und Bestandteil von diesen sind und dass diese Verjüngungs-/Bodenflächenbereiche im aufgestellten Befüllungszustand Bestandteil der Bodenfläche werden, sollen sie im Sinne der Erfindung als Verjüngungs-/Bodenflächenbereiche bezeichnet werden.

Mit der vorangehend geschilderten erfindungsgemäßen Kunststofftragetasche werden Kunststofftragetaschen mit einem großen Fassungsvolumen mittels großindustrieller Fertigungstechnik zugänglich. Dies gelingt dadurch, dass Seitenwände vorgesehen sind, deren sich zum Bodenende hin verjüngende Abschnitte beim Befüllungsvorgang Bestandteil einer, insbesondere im Wesentlichen rechteckigen oder quadratischen, Bodenfläche werden. Überraschenderweise kann diese insbesondere im Wesentlichen rechteckige oder quadratische Bodenfläche auch bereits im unbefüllten Zustand durch einfaches Hineingreifen in das Tascheninnere sowie Auseinanderziehen von Vorder- und Rückwand erhalten werden. In diesem Befüllzustand ist die erfindungsgemäße Kunststofftragetasche vorteilhafterweise selbststehend mit einem geöffneten Öffnungsquerschnitt, so dass sie mit beiden Händen befüllt werden kann. Diese vorteilhaften Eigenschaften stellen sich in einer bevorzugten Ausführungsform insbesondere auch dadurch ein, dass die erste und die zweite Seitenwand jeweils eine, insbesondere nach innen weisende, Seitenfalte aufweisen. Diese Seitenfalten erstrecken sich vorzugsweise bis zum Übergang, besonders bevorzugt bis zur Bodenfalte, und beginnen bevorzugt am Öffnungsende der Kunststofftragetasche.

Als besonders vorteilhaft hat sich eine solche Ausführungsform erwiesen, bei der der erste und der zweite Seitenrand der ersten Seitenwand sich im Verjüngungs-/Bodenflächenbereich, insbesondere stetig, annähern und insbesondere im Bereich des Übergangs, vorzugsweise der Bodenfalte, zusammenlaufen und bei der der erste und der zweite Seitenrand der zweiten Seitenwand sich im Verjüngungs-/Bodenflächenbereich, insbesondere stetig, annähern und insbesondere im Bereich des Übergangs, vorzugsweise der Bodenfalte, zusammenlaufen. Die erste und die zweite Seitenwand verfügen dabei im Verjüngungs-/Bodenflächenbereich vorzugsweise über eine dreieckige Grundform. Mit anderen Worten, die gegenüberliegenden Seitenränder von erster und zweiter Seitenwand laufen im Verjüngungs-/Bodenflächenbereich aufeinander zu und treffen sich am Bodenende bzw. am Übergang von Vorder- zur Rückwand, insbesondere münden sie in die Bodenfalte ein. Im Bereich der sich gegenüberliegenden Seitenränder von erster und zweiter Seitenwand sind diese im Verjüngungs-/Bodenflächenbereich mit der Vorder- bzw. der Rückwand verschweißt, bevorzugt jeweils mit der Innenseite von Vorder- bzw. Rückwand, insbesondere im Bereich der jeweiligen Seitenränder von Vorder- und Rückwand. Neben der dreieckförmigen Ausgestaltung der ersten und zweiten Seitenwand im Verjüngungs-/Bodenflächenbereich kann dieser Flächenbereich z.B. auch halbkreisförmig, rechteckförmig oder quadratisch ausgestaltet sein, wobei die dreieckförmige Ausgestaltung bevorzugt ist.

Hierbei kann insbesondere vorgesehen sein, dass sich die Vorderwand vom dem dem Öffnungsende zugewandten Beginn des Verjüngungs-/Bodenflächenbereichs am ersten Seitenrand bis zum ersten Ende des Übergangs, insbesondere der Bodenfalte, geradlinig verjüngt. Alternativ sowie insbesondere zusätzlich kann vorgesehen sein, dass sich die Vorderwand vom dem dem Öffnungsende zugewandten Beginn des Verjüngungs-/Bodenflächenbereichs am zweiten Seitenrand bis zum zweiten Ende des Übergangs, insbesondere der Bodenfalte, geradlinig verjüngt. In entsprechender Weise kann sich die Rückwand vom dem dem Öffnungsende zugewandten Beginn des Verjüngungs-/Bodenflächenbereichs am ersten Seitenrand bis zum ersten Ende des Übergangs, insbesondere der Bodenfalte, geradlinig verjüngen, wobei alternativ sowie insbesondere zusätzlich vorgesehen werden kann, dass sich die Rückwand vom dem dem Öffnungsende zugewandten Beginn des Verjüngungs-/Bodenflächenbereichs am zweiten Seitenrand bis zum zweiten Ende des Übergangs, insbesondere der Bodenfalte, geradlinig verjüngt.

Die erste und die zweite Seitenwand basieren zweckmäßigerweise jeweils auf separaten Materialzuschnitten. Diese Materialzuschnitte können an die Größe und Form von Vorder- und Rückwand bzw. an die Gestaltung des aus Vorder- und Rückwand gebildeten Taschengrundkorpus individuell angepasst werden.

Sehr praktikable Ausgestaltungen der erfindungsgemäßen Kunststofftragetaschen sehen insbesondere auch vor, dass die Erstreckung von dem ersten bis zum zweiten Seitenrand der ersten Seitenwand der Summe aus der Erstreckung des Verjüngungs-/Bodenflächenbereichs der Vorderwand, gerechnet vom Übergang, insbesondere der Bodenfalte, und der Erstreckung des Verjüngungs-/Bodenflächenbereichs der Rückwand, gerechnet vom Übergang, insbesondere der Bodenfalte, im Wesentlichen entspricht, insbesondere entspricht. Alternativ und insbesondere zusätzlich kann dabei vorgesehen sein, dass die Erstreckung von dem ersten bis zum zweiten Seitenrand der zweiten Seitenwand der Summe aus der Erstreckung des Verjüngungs-/Bodenflächenbereichs der Vorderwand, gerechnet vom Übergang, insbesondere der Bodenfalte, und der Erstreckung des Verjüngungs-/Bodenflächenbereichs der Rückwand, gerechnet vom Übergang, insbesondere der Bodenfalte, im Wesentlichen entspricht, insbesondere entspricht.

Bei dreieckförmiger Ausgestaltung der ersten und der zweiten Seitenwand im Verjüngungs-/Bodenflächenbereich, sowie insbesondere bei rechteckiger oder quadratischer Ausgestaltung des verbleibenden Abschnitts der ersten bzw. zweiten Seitenwand, kann in einer von mehreren zweckmäßigen Ausgestaltungen der erfindungsgemäßen Kunststofftragetasche vorgesehen sein, dass die Breite B der ersten und/oder der zweiten Seitenwand sich gemäß der folgenden Formel bestimmt

$$B = 2 \times \sin (\alpha - 90) \times R,$$

wobei

$\alpha$:  Winkel, den die Schenkel des ersten Seitenrands von Vorder- und Rückwand beim Übergang in den Verjüngungs-/Bodenflächenbereich bilden, und/oder, insbesondere und, Winkel, den die Schenkel des zweiten Seitenrands von Vorder- und Rückwand beim Übergang in den Verjüngungs-/Bodenflächenbereich bilden,

R:  Länge des Schenkels des ersten Seitenrands von Vorder- und Rückwand vom Beginn des Verjüngungs-/Bodenflächenbereichs bis zum ersten Ende des Übergangs und/oder, insbesondere und, Länge des Schenkels des zweiten Seitenrands von Vorder- und Rückwand vom Beginn des Verjüngungs-/Bodenflächenbereichs bis zum zweiten Ende des Übergangs und

B:  Breite B der ersten und/oder, insbesondere und, der zweiten Seitenwand in dem Abschnitt, der nicht mit dem Verjüngungs-/Bodenflächenbereich korrespondiert, bedeuten.

In einer sehr zweckmäßigen Ausführungsform der erfindungsgemäßen Kunststofftragetasche kann dabei vorgesehen sein, dass sich die Vorderwand vom dem dem Öffnungsende zugewandten Beginn des Verjüngungs-/Bodenflächenbereichs am ersten Seitenrand bis zum ersten Ende des Übergangs, insbesondere der Bodenfalte, geradlinig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende des Übergangs, insbesondere der Bodenfalte, geradlinig verjüngt und dass sich die Rückwand vom dem dem Öffnungsende zugewandten Beginn des Verjüngungs-/Bodenflächenbereichs am ersten Seitenrand bis zum ersten Ende des Übergangs, insbesondere der Bodenfalte, geradlinig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende des Übergangs, insbesondere der Bodenfalte, geradlinig verjüngt.

In einer noch weiteren, ebenfalls sehr zweckmäßigen Ausführungsform der erfindungsgemäßen Kunststofftragetasche kann vorgesehen sein, dass sich die Vorderwand vom dem dem Öffnungsende zugewandten Beginn des Verjüngungs-/Bodenflächenbereichs am ersten Seitenrand bis zum ersten Ende des Übergangs, insbesondere der Bodenfalte, konkavförmig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende des Übergangs, insbesondere der Bodenfalte, konkavförmig verjüngt und dass sich die Rückwand vom dem dem Öffnungsende zugewandten Beginn des Verjüngungs-/Bodenflächenbereichs am ersten Seitenrand bis zum ersten Ende des Übergangs, insbesondere der Bodenfalte, konkavförmig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende des Übergangs, insbesondere der Bodenfalte, konkavförmig verjüngt. Alternativ zu der vorangehend geschilderten konkavförmigen Verjüngung kann auch eine konvexförmige Verjüngung vorgesehen sein. Dementsprechend kann in einer solchen Ausführungsform vorgesehen sein, dass sich die Vorderwand vom dem dem Öffnungsende zugewandten Beginn des Verjüngungs-/Bodenflächenbereichs am ersten Seitenrand bis zum ersten Ende des Übergangs, insbesondere der Bodenfalte, konvexförmig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende des Übergangs, insbesondere der Bodenfalte, konvexförmig verjüngt und dass sich die Rückwand vom dem dem Öffnungsende zugewandten Beginn des Verjüngungs-/Bodenflächenbereichs am ersten Seitenrand bis zum ersten Ende des Übergangs, insbesondere der Bodenfalte, konvexförmig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende des Übergangs, insbesondere der Bodenfalte, konvexförmig verjüngt.

In einer weiteren alternativen Ausführungsform kann vorgesehen sein, dass sich die Vorderwand an dem dem Öffnungsende zugewandten Beginn des Verjüngungs-/Bodenflächenbereichs am ersten Seitenrand in Richtung des gegenüberliegenden zweiten Seitenrands in einem ersten Abschnitt verjüngt und in dem sich bis zum ersten Ende des Übergangs, insbesondere der Bodenfalte, anschließenden Abschnitt weniger stark oder nicht mehr verjüngt und/oder, insbesondere und, dass sich die Vorderwand an dem dem Öffnungsende zugewandten Beginn des Verjüngungs-/Bodenflächenbereichs am zweiten Seitenrand in Richtung des gegenüberliegenden ersten Seitenrands in einem ersten Abschnitt verjüngt und in dem sich bis zum zweiten Ende des Übergangs, insbesondere der Bodenfalte, anschließenden Abschnitt weniger stark oder nicht mehr verjüngt und dass sich die Rückwand an dem dem Öffnungsende zugewandten Beginn des Verjüngungs-/Bodenflächenbereichs am ersten Seitenrand in Richtung des gegenüberliegenden zweiten Seitenrands in einem ersten Abschnitt verjüngt und in dem sich bis zum ersten Ende des Übergangs, insbesondere der Bodenfalte, anschließenden Abschnitt weniger stark oder nicht mehr verjüngt und/oder, insbesondere und, dass sich die Rückwand an dem dem Öffnungsende zugewandten Beginn des Verjüngungs-/Bodenflächenbereichs am zweiten Seitenrand in Richtung des gegenüberliegenden ersten Seitenrands in einem ersten Abschnitt verjüngt und in dem sich bis zum zweiten Ende des Übergangs, insbesondere der Bodenfalte, anschließenden Abschnitt weniger stark oder nicht mehr verjüngt. Bei der letztgenannten Ausführungsform kann in einer Variante der Verjüngungs-/Bodenflächenbereich durch eine Änderung des Verlaufs des ersten und zweiten Seitenrands von Vorder- und Rückwand um jeweils 90° in Bezug auf den Verlauf dieser Seitenränder jenseits des Verjüngungs-/Bodenflächenbereichs eingeleitet werden, wobei dieser Verlauf sich anschließend jeweils nochmals um 90° ändert in Richtung des Übergangs von Vorder- zur Rückwand. In diesem Abschnitt bleibt die Breite des Verjüngungs-/Bodenflächenbereichs konstant.

Ein besonders hohes Maß an mechanischer Stabilität stellt sich auch dadurch ein, dass benachbart zum oder im Bereich des ersten Endes des Übergangs, insbesondere der Bodenfalte, die erste Seitenwand, die mehrlagige Vorderwand und die mehrlagige Rückwand miteinander verschweißt vorliegen und/oder, insbesondere und, dass benachbart zum oder im Bereich des zweiten Endes des Übergangs, insbesondere der Bodenfalte, die zweite Seitenwand, die mehrlagige Vorderwand und die mehrlagige Rückwand miteinander verschweißt vorliegen. Dabei ist in einer Ausführungsform, die die der Erfindung zugrunde liegende Aufgabe besonders zufriedenstellend löst, vorgesehen, dass benachbart zum oder im Bereich des ersten Endes des Übergangs, insbesondere der Bodenfalte, die erste Seitenwand, die Vorderwand und die Rückwand in einem ersten Areal miteinander verschweißt vorliegen. Alternativ und insbesondere zusätzlich kann dabei vorgesehen sein, dass benachbart zum oder im Bereich des zweiten Endes des Übergangs, insbesondere der Bodenfalte, die zweite Seitenwand, die Vorderwand und die Rückwand in einem zweiten Areal miteinander verschweißt vorliegen. Bevorzugt liegt im ersten Areal und/oder, insbesondere und, im zweiten Areal jeweils eine fünf-, sechs-, sieben- oder achtlagige Verschweißung, besonders bevorzugt eine sechs- oder achtlagige Verschweißung, vor. Das sechslagig verschweißte erste oder zweite Areal kommt dadurch zustande, dass die doppellagige Vorderwand, die doppellagige Rückwand sowie die gegeneinander anliegenden, insbesondere bereits mit der doppellagigen Vorderwand bzw. der doppellagigen Rückwand verschweißten, Bereiche der ersten bzw. zweiten Seitenwand beim Verschweißungsvorgang gegeneinander anliegen. Wird bei dieser Vorgehensweise eine doppellagige Seitenwand eingesetzt, erhält man die achtlagig verschweißten Areale. Die vorangehend spezifizierten Ausführungsformen führen regelmäßig zu einer besonders stabilen Bodenfläche im aufgestellten Befüllzustand sowie insbesondere zu einer mechanisch stark belastbaren und häufig wiederverwendbaren Kunststofftragetasche.

Überraschend hat sich herausgestellt, dass die erfindungsgemäßen Kunststofftragetaschen selbst dann über eine ausgeprägte mechanische Stabilität und Standfestigkeit verfügen, wenn die erste und die zweite Seitenwand, abweichend von der Vorder- und Rückwand, einlagig ausgestaltet sind. Selbstverständlich ist es ebenfalls möglich, die erste und die zweite Seitenwand mehrlagig, insbesondere doppellagig, auszugestalten. Hierdurch kann die Stabilität nochmals gesteigert werden. Vielfach geht aber auch mit einlagigen ersten und zweiten Seitenwänden schon eine nochmals gesteigerte Stabilität und insbesondere gesteigerte Standfestigkeit damit einher, dass diese am Öffnungsende einen Saum aufweisen. Dieser Saum kann dabei z.B. in gleicher Weise ausgestaltet sein und erhalten werden wie die Verstärkungsbereiche von Vorder- und Rückwand, d.h. unter Zuhilfenahme eines sich an die Seitenwand anschließenden Fortsetzungsabschnitts, der umgeschlagen wird. Hierbei hat es sich für viele Anwendungen als ausreichend erwiesen, dass dieser Fortsetzungsabschnitt einfach, d.h. unter Ausbildung nur einer Lage, auf die Innenseite oder Außenseite, insbesondere die Innenseite, umgeschlagen wird. Auch kann der Saum durch einen separaten Kunststoffmaterialstreifen gebildet werden. Fortsetzungsabschnitt wie auch Kunststoffmaterialstreifen werden bevorzugt mittels Verschweißung mit der Innen- oder Außenseite von erster und zweiter Seitenwand verbunden.

Solche erfindungsgemäßen Kunststofftragetaschen lösen die der Erfindung zugrunde liegende Aufgabe besonders zuverlässig, bei denen die mit der Vorderwand und die mit der Rückwand verbundene Halteschlaufe jeweils in ihren ersten und zweiten Anbindungsbereichen mit dem ein- oder mehrlagigen, insbesondere mehrlagigen, Kunststofffolienstreifen des Verstärkungsbereichs und auch mit der mindestens einen innenliegenden Lage, insbesondere der Innenlage, und der Außenlage verschweißt ist und wobei der ein- oder mehrlagige, insbesondere mehrlagige, Kunststofffolienstreifen des Verstärkungsbereichs der Vorderwand mit der Innen- oder Außenlage von oder beabstandet von dem ersten Seitenrand in Richtung des oder bis zum zweiten Seitenrand mittels Verschweißung befestigt ist und wobei der ein- oder mehrlagige, insbesondere mehrlagige, Kunststofffolienstreifen des Verstärkungsbereichs der Rückwand mit der Innen- oder Außenlage von oder beabstandet von dem ersten Seitenrand in Richtung des oder bis zum zweiten Seitenrand mittels Verschweißung befestigt ist, wobei die ersten und zweiten Anbindungsbereiche der mit der Vorderwand verbundenen Halteschlaufe und die ersten und zweiten Anbindungsbereiche der mit der Rückwand verbundenen Halteschlaufe an der Innenseite von Vorder- bzw. Rückwand im Bereich des ein- oder mehrlagigen, insbesondere mehrlagigen, Kunststofffolienstreifens des Verstärkungsbereichs vorliegen, wobei sich an die Außenlage jeweils ein Fortsetzungsabschnitt anschließt, wobei der Fortsetzungsabschnitt den Kunststofffolienstreifen des Verstärkungsbereichs bildet, wobei der Fortsetzungsabschnitt sich mindestens abschnittsweise entlang der Innenseite der mindestens einen innenliegenden Lage, insbesondere der Innenlage, erstreckt und an dieser anliegt, wobei dieser an der Innenseite der mindestens einen innenliegenden Lage, insbesondere der Innenlage, vorliegende Fortsetzungsabschnitt mittels Umschlagens zumindest bereichsweise mindestens doppellagig ausgestaltet ist, wobei dieser Fortsetzungsabschnitt entlang einer Erstreckung von oder beabstandet von dem ersten Seitenrand in Richtung des oder bis zum zweiten Seitenrand mit der Innenseite der mindestens einen innenliegenden Lage, insbesondere der Innenlage, verschweißt ist, insbesondere mit einer kontinuierlichen Längsschweißung, und wobei die Außenlage von Vorder- und -Rückwand, insbesondere im Übergang zum Fortsetzungsabschnitt, den Öffnungsrand umfasst oder bildet, und wobei die mindestens eine innenliegende Lage, insbesondere die Innenlage, mit ihrem oberen Rand sich bis zum Öffnungsrand oder beabstandet hiervon erstreckt, wobei die Außenlage und der Fortsetzungsabschnitt der Vorderwand und die Außenlage und der Fortsetzungsabschnitt der Rückwand jeweils einstückig ausgebildet sind und wobei der ein- oder mehrlagige, insbesondere doppellagige, Kunststofffolienstreifen des Verstärkungsbereichs von Vorder- und Rückwand jeweils über seine sämtlichen Lagen mit der Innenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines ersten Verbindungsbereichs, insbesondere Verbindungsstreifens, verschweißt ist, wobei dieser erste Verbindungsbereich, insbesondere Verbindungsstreifen, jeweils näher beabstandet zum unteren Rand des Verstärkungsbereichs als zu dessen oberen Rand vorliegt, insbesondere am oder benachbart zum unteren Rand des Verstärkungsbereichs, wobei die Außenlage von Vorder- und Rückwand jeweils mit der Außenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines zweiten Verbindungsbereichs, insbesondere zweiten Verbindungsstreifens, verschweißt ist, wobei dieser zweite Verbindungsbereich, insbesondere zweiten Verbindungsstreifen, jeweils näher beabstandet zum unteren Rand des Verstärkungsbereichs als zu dessen oberen Rand vorliegt, insbesondere am oder benachbart zum unteren Rand des Verstärkungsbereichs, wobei die mittels Verschwei-βung erhaltenen ersten und zweiten Anbindungsbereiche der mit der Vorderwand und/oder mit der Rückwand verbundenen Halteschlaufen beabstandet von dem ersten und zweiten Verbindungsbereichen, insbesondere den ersten und zweiten Verbindungstreifen, vorliegen, insbesondere keine Überlappung mit dem ersten und zweiten Verbindungsbereichen aufweisen, wobei die mit der Vorderwand und/oder die mit der Rückwand innenseitig verbundene Halteschlaufe jeweils in ihren ersten und zweiten Anbindungsbereichen, direkt oder indirekt, mit dem ein- oder mehrlagigen, insbesondere mehrlagigen, Kunststofffolienstreifen des Verstärkungsbereichs und mit der mindestens einen innenliegenden Lage, insbesondere der Innenlage, und der Außenlage, verschweißt ist.

Mit der vorangehend geschilderten erfindungsgemäßen Ausführungsform einer Kunststofftragetasche wird eine besonders ausgeprägte Verstärkung insbesondere auch im oberen

Randbereich verfügbar gemacht, die mechanisch starken Belastungen standhält und eine sehr wirkungsvolle Grundlage für die Anbindung von Halteschlaufen liefert. Auch ist die mit einem derartigen Verstärkungsbereich versehene Kunststofftragetasche bequem und unproblematisch zu öffnen.

Besonders geeignete erfindungsgemäße Kunststofftragetaschen zeichnen sich auch dadurch aus, dass in dem Abschnitt, der nicht der Verjüngungs-/Bodenflächenbereich ist, die erste Seitenwand im Bereich ihres ersten Seitenrandes mit der Vorderwand, insbesondere entlang deren erstem Seitenrand, und im Bereich des zweiten Seitenrands mit der Rückwand, insbesondere entlang deren erstem Seitenrand, verschweißt ist, wobei in dem Abschnitt, der nicht der Verjüngungs-/Bodenflächenbereich ist, die zweite Seitenwand im Bereich ihres ersten Seitenrandes mit der Vorderwand, insbesondere entlang deren zweitem Seitenrand, und im Bereich des zweiten Seitenrands mit der Rückwand, insbesondere entlang deren zweitem Seitenrand, verschweißt ist.

Die erfindungsgemäßen Kunststofftragetaschen sind bevorzugt aus thermoplastischen Kunststoffen gefertigt, wobei polyolefinische Thermoplaste, insbesondere Polyethylen, bevorzugt sind. Die Verbindung mittels Verschweißung stellt in diesen Fällen regelmäßig eine thermoplastische Verschweißung dar. Demgemäß sind die erfindungsgemäßen Kunststofftragetaschen besonders bevorzugt vollständig aus thermoplastischen Kunststoffen, insbesondere polyolefinischen Thermoplasten wie Polyethylen gefertigt. Auf diese Weise gelangt man zu sortenreinen Kunststofftaschen, die besonders nachhaltig recyclbar sind.

Die Außenlage von Vorder- und Rückwand der erfindungsgemäße Kunststofftragetasche stellt regelmäßig eine Einzellage dar. Liegt innenseitig und benachbart zur Außenlage eine weitere Lage vor, ist diese zu den innenseitigen Lagen zu zählen bzw. stellt die Innenlage dar. Liegt der Fortsetzungsabschnitt einstückig mit der Außenlage vor, hat auch dieser Fortsetzungsabschnitt zwangsläufig einlagig zu sein. Die Einlagigkeit der Außenlage von Vorder- und Rückwand schließt nicht aus, dass die Außenlage mehrschichtig sein und beispielsweise als Coextrusionsfolie vorliegen kann. Auch kann eine einlagige Außenlage innen- und/oder außenseitig eine aufkaschierte Schicht aufweisen, ohne den Charakter der Einlagigkeit zu verlieren. Bei mehrschichten Systemen liegen die Schichten demgemäß in einem engen Verbund vor. Die Außenlage und die Innenlage bzw. die Mehrzahl der innenseitigen Lagen sind demgemäß in einer bevorzugten Ausführungsform nur über die Verschweißung entlang ihrer Seitenränder miteinander verbunden. Alternativ kann auch vorgesehen sein, dass die Außenlage und die Innenlage bzw. die Mehrzahl der innenseitigen Lagen partiell miteinander verbunden sind, z.B. über vereinzelte Schweiß- oder Klebepunkte, insbesondere Schweißpunkte. In einer bevorzugten Ausführungsform der vorangehend spezifizierten Kunststofftragetasche kann dabei vorgesehen sein, dass die mit der Vorderwand über ihre ersten und zweiten Anbindungsbereiche verbundene Halteschlaufe und die mit der Rückwand über ihre ersten und zweiten Anbindungsbereiche verbundene Halteschlaufe im Bereich vom jeweiligen ersten bis zum zweiten Anbindungsbereich zumindest abschnittsweise einen ersten flexiblen, insbesondere schlauchförmigen, Hohlkörper und/oder einen ein- oder mehrlagigen, keinen Hohlkörper bildenden Materialstreifen, insbesondere Kunststoffmaterialstreifen, aufweist, der zumindest abschnittsweise, insbesondere im Wesentlichen vollständig, von einem zweiten flexiblen, insbesondere schlauchförmigen, Hohlkörper umhüllt ist.

Hinsichtlich der Halteschlaufen der erfindungsgemäßen Kunststofftragetaschen sind solche bevorzugt, bei denen der erste flexible, insbesondere schlauchförmige, Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt und/oder verklebt sind und/oder, vorzugsweise und, bei denen der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt und/oder verklebt sind.

Die ersten und zweiten flexiblen Kunststoffmaterialstreifen, beispielsweise in Form von Polyolefinfolienstreifen, insbesondere Polyethylenfolienstreifen, können in einer bevorzugten Ausgestaltung, wenn flächig ausgebreitet, eine Rechteckform aufweisen. Die Längsränder dieser Materialstreifen können dann unter Ausbildung der ersten bzw. zweiten insbesondere schlauchförmigen Hohlkörper aufeinander zu bewegt und im Überlappungsbereich miteinander verbunden werden. Hierbei kann der erste Längsseitenrand sowohl ober- wie auch unterhalb des zweiten Längsseitenrandes in einem Überlappungsbereich an diesem zur Anlage gelangen.

Ein besonders hohes Maß an Festigkeit stellt sich hierbei insbesondere auch dadurch ein, dass der erste Kunststoffmaterialstreifen des ersten flexiblen, insbesondere schlauchförmigen, Hohlkörpers und der zweite Kunststoffmaterialstreifen des zweiten flexiblen, insbesondere schlauchförmigen, Hohlkörpers zumindest abschnittsweise, insbesondere entlang der ersten und zweiten Überlappungsbereiche, miteinander verschweißt und/oder verklebt sind. Vielfach hat es sich als zweckmäßig erwiesen, die Verschweißung von erstem und zweitem Kunststoffmaterialstreifen im ersten und bzw. zweiten Überlappungsbereich in einem einzigen Verfahrensschritt, d.h. im Wesentlichen gleichzeitig vorzunehmen. Hierdurch entsteht eine sich entlang der insbesondere schlauchförmigen Halteschlaufe erstreckende einheitliche Schweißnaht. Diese Ausführungsform hat den weiteren Vorteil, dass der erste und der zweite flexible Hohlkörper in dem Bereich dieser einheitlichen Schweißnaht miteinander verbunden vorliegen, wodurch eine nochmals gesteigerte mechanische Festigkeit resultiert. Alternativ können der erste und der zweite insbesondere schlauchförmige Hohlkörper auch bereichsweise oder kontinuierlich entlang ihrer gesamten Länge, insbesondere entlang eines Verbindungsstreifens, miteinander verbunden sein, ohne dass die ersten und zweiten Überlappungsbereiche in diesem Anbindungsbereich selber überlappen.

In einer alternativen Ausgestaltung kann hinsichtlich der Verbindung der ersten und zweiten flexiblen Hohlkörper vorgesehen sein, dass der erste flexible, insbesondere schlauchförmige, Hohlkörper aus einem ersten flexiblen Kunststoffmaterialstreifen mit gegenüberliegenden ersten und zweiten Längsseitenrändern gebildet ist und dass der zweite flexible, insbesondere schlauchförmige, Hohlkörper aus einem zweiten flexiblen Kunststoffmaterialstreifen mit gegenüberliegenden ersten und zweiten Längsseitenrändern gebildet ist, wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt und/oder verklebt sind und wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt und/oder verklebt sind.

Für viele Anwendungen hat es sich als zweckmäßig erwiesen, auf solche Kunststofftragetaschen zurückzugreifen, bei denen die erste Halteschlaufe enthaltend die ersten und zweiten flexiblen, insbesondere schlauchförmigen, Hohlkörper und/oder die zweite Halteschlaufe enthaltend die ersten und zweiten flexiblen, insbesondere schlauchförmigen, Hohlkörper unter Ausbildung von zwei gegenüberliegenden Längsfaltkanten flächig gepresst vorliegen, wobei vorzugsweise die Überlappungsbereiche der gegenüberliegenden ersten und zweiten Längsseitenränder von erstem und zweitem flexiblen Kunststoffmaterialstreifen der ersten und zweiten flexiblen Hohlkörper von erster und/oder zweiter Halteschlaufe zwischen den sich gegenüberliegenden Längsfaltkanten sowie insbesondere auf derselben Seite vorliegen. Alternativ kann auch vorgesehen sein, dass die erste Halteschlaufe enthaltend den ein- oder mehrlagigen, keinen Hohlkörper bildenden Materialstreifen und den zweiten flexiblen, insbesondere schlauchförmigen, Hohlkörper und/oder die zweite Halteschlaufe enthaltend den ein- oder mehrlagigen, keinen Hohlkörper bildenden Materialstreifen und den zweiten flexiblen, insbesondere schlauchförmigen, Hohlkörper unter Ausbildung von zwei gegenüberliegenden Längsfaltkanten flächig gepresst vorliegen, wobei vorzugsweise der Überlappungsbereich der gegenüberliegenden ersten und zweiten Längsseitenränder von zweitem flexiblen Kunststoffmaterialstreifen der zweiten flexiblen Hohlkörper von erster und/oder zweiter Halteschlaufe zwischen den sich gegenüberliegenden Längsfaltkanten vorliegen. Mit Hilfe der vorangehenden Ausgestaltungen kann die Vorstufe für die Halteschlaufe in einem flachgepressten Zustand auf einer Rolle gewickelt zwischengelagert und bei Bedarf von dieser abgetrennt werden. Auch vermittelt die flächig gepresste Halteschlaufe ein angenehmes Tragegefühl und erlaubt eine gleichmäßige Verteilung der Tragekräfte.

Eine weitere vorteilhafte Ausgestaltung insbesondere auch der vorangehenden Ausführungsform sieht vor, dass im ersten und/oder zweiten Anbindungsbereich von, insbesondere flächig gepresster, erster und/oder zweite Halteschlaufe diejenige Seite der, insbesondere flächig gepressten, Halteschlaufe die Anbindungsseite ist, die nicht die Überlappungsbereiche der gegenüberliegenden ersten und zweiten Längsseitenränder von erstem und zweitem flexiblen Kunststoffmaterialstreifen der ersten und zweiten flexiblen Hohlkörper aufweist. Es hat sich überraschend gezeigt, dass auf diese Weise eine besonders gute mechanische Stabilität und Reißfestigkeit erzielt wird.

Mit den Halteschlaufen für die erfindungsgemäßen Kunststofftragetaschen lassen sich auch derartige Ausführungsformen verwirklichen, bei denen der zweite flexible, insbesondere schlauchförmige, Hohlkörper der Halteschlaufe von Vorder- und/oder Rückwand, insbesondere der den zweiten flexiblen, insbesondere schlauchförmigen, Hohlkörper der Halteschlaufe von Vorder- und/oder Rückwand bildende oder enthaltende zweite flexible Kunststoffmaterialstreifen, auf einem mindestens abschnittweise transparenten Kunststoffmaterial, insbesondere Polyethylen, basiert, das mindestens abschnittsweise innenseitig, insbesondere mittels Konterdruckverfahren, bedruckbar oder bedruckt ist. Indem bei der geschilderten Ausgestaltung der Druck innenseitig an dem zweiten Hohlkörper der Halteschlaufe vorliegt, wird dieser beim Tragen, beispielsweise durch Abrieb, nicht beeinträchtigt. Dies gelingt auch mit einer Ausführungsform, bei der der erste flexible, insbesondere schlauchförmige, Hohlkörper oder der ein- oder mehrlagige, keinen Hohlkörper bildende Materialstreifen, insbesondere Kunststoffmaterialstreifen, der Halteschlaufe von Vorder- und/oder Rückwand mindestens abschnittsweise außenseitig bedruckbar oder bedruckt ist und dass der zweite flexible, insbesondere schlauchförmige, Hohlkörper der Halteschlaufe auf einem mindestens abschnittweise transparenten Kunststoffmaterial, insbesondere Polyethylen, basiert oder hieraus besteht. Die vorangehenden Ausgestaltungen der erfindungsgemäßen Kunststofftragetasche gestatten auch, die Halteschlaufe bzw. die Halteschlaufen als Informations- oder Werbemittelträger oder für die Anbringung von Designelementen zu verwenden.

Darüber hinaus kann im Sinne der Erfindung vorgesehen sein, dass die Außenlage von Vorder- und/oder Rückwand auf einem mindestens abschnittweise transparenten Kunststoffmaterial, insbesondere Polyethylen, basiert oder hieraus besteht, das mindestens abschnittsweise innenseitig, insbesondere mittels Konterdruckverfahren, bedruckbar oder bedruckt ist. Ferner umfasst die erfindungsgemäße Kunststofftragetasche alternativ oder zusätzlich mindestens eine innenliegende Lage, insbesondere die Innenlage, von Vorder- und/oder Rückwand, die mindestens abschnittsweise außenseitig bedruckbar oder bedruckt ist und wobei die Außenlage auf einem mindestens abschnittweise transparenten Kunststoffmaterial, insbesondere Polyethylen, basiert oder hieraus besteht.

Ein besonders hohes Maß an Stabilität und Reißfestigkeit wird auch dadurch erreicht, dass man bei den vorangehend genannten Ausführungsformen für eine Außenlage einer erfindungsgemäße Kunststofftragetasche eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie einsetzt. Die Kombination aus einer geschäumten Kunststoffinnenlage und eine nicht geschäumten Kunststoffau-ßenlage führt hier überraschenderweise zu besonders mechanisch belastbaren und dauerhaft stabilen Kunststofftragetaschen. Das gleiche trifft auf solche bevorzugten Ausgestaltungen der Halteschlaufe zu, bei denen der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere eine nicht geschäumte LD-Polyethylenfolie, basiert oder hieraus gebildet ist.

Demgemäß kann in einer sehr zweckmäßigen Ausgestaltung vorgesehen sein, dass die Außenlage, der ein- oder mehrlagige, insbesondere doppellagige, Kunststofffolienstreifen des Verstärkungsbereichs, insbesondere der Fortsetzungsabschnitt von Innen- oder Außenlage, und die mindestens eine innenliegende Lage, insbesondere die Innenlage, von Vorder- und Rückwand, die erste und die zweite Seitenwand sowie gegebenenfalls die mit der Vorderwand und mit der Rückwand verbundenen Halteschlaufen, insbesondere deren erste und/oder zweite flexible Kunststoffmaterialstreifen oder deren ein- oder mehrlagiger, keinen Hohlkörper bildender Materialstreifen, aus Polyethylen, insbesondere LD-Polyethylen, gebildet sind oder bestehen, wobei die mindestens eine innenliegende Lage, insbesondere die Innenlage, von Vorder- und Rückwand eine geschäumte Polyethylenfolie, insbesondere eine geschäumte LD-Polyethylenfolie, darstellt, und wobei die Außenlage von Vorder- und/oder Rückwand, und gegebenenfalls der ein- oder mehrlagige, insbesondere mehrlagige, Kunststofffolienstreifen des Verstärkungsbereichs, eine nicht geschäumte Polyethylenfolie, insbesondere eine nicht geschäumte LD-Polyethylenfolie, darstellt. In diesem Zusammenhang sind solche Kunststofftragetaschen besonders bevorzugt, bei denen der erste flexible, insbesondere schlauchförmige, Hohlkörper oder der ein- oder mehrlagige, keinen Hohlkörper bildende Materialstreifen der Halteschlaufe von Vorder- und/oder Rückwand, insbesondere der erste flexible Kunststoffmaterialstreifen, aus geschäumtem Polymermaterial, vorzugsweise geschäumtem Polyethylen, und besonders bevorzugt geschäumtem LD-Polyethylen, gebildet ist oder besteht und wobei vorzugsweise der zweite flexible, insbesondere schlauchförmige, Hohlkörper der Halteschlaufe von Vorder- und/oder Rückwand, insbesondere der zweite flexible Kunststoffmaterialstreifen, aus nicht geschäumtem Polymermaterial, vorzugsweise nicht geschäumtem Polyethylen, und besonders bevorzugt nicht geschäumtem LD-Polyethylen, gebildet ist oder besteht.

Im Sinne der vorliegenden Erfindung liegen die Außenlage, der ein- oder mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand zweckmäßigerweise in Folienform vor.

Ein besonders hohes Maß an Stabilität und Reißfestigkeit wird bei den genannten Ausführungsformen eine erfindungsgemäßen Kunststofftragetasche auch dadurch erreicht, dass die, insbesondere mittels Verschweißung erhaltenen, ersten und zweiten Anbindungsbereiche der mit der Vorderwand und/oder mit der Rückwand verbundenen Halteschlaufen beabstandet von dem ersten und/oder zweiten Verbindungstreifen vorliegen, insbesondere keine Überlappung mit dem ersten und/oder zweiten Verbindungsstreifen aufweisen.

Bei den erfindungsgemäßen Kunststofftragetasche ist bevorzugt vorgesehen, dass die Außenlage, der ein- oder mehrlagige, insbesondere doppellagige, Kunststofffolienstreifen des Verstärkungsbereichs, insbesondere der Fortsetzungsabschnitt von Innen- und/oder Außenlage, und die mindestens eine innenliegende Lage, insbesondere die Innenlage, von Vorder-und/oder Rückwand sowie gegebenenfalls die mit der Vorderwand und/oder mit der Rückwand verbundenen Halteschlaufen, insbesondere deren erste und/oder zweite flexible Kunststoffmaterialstreifen und/oder der ein- oder mehrlagige, keinen Hohlkörper bildende Materialstreifen, aus Polyolefinen, insbesondere Polyethylen, gebildet sind oder bestehen. Alternativ zu Polyethylen kann auch auf Polypropylen zurückgegriffen werden. Ebenfalls kommen Copolymere mit Ethylen oder Propylen als Hauptkomponente in Betracht, wobei für die weiteren Comonomeren zum Beispiel auf Propylen bzw. Ethylen und/oder Buten, beispielsweise 1-Buten, oder Butadien zurückgegriffen werden kann.

Besonders bevorzugt ist vorgesehen, dass die Außenlage, der ein- oder mehrlagige, insbesondere doppellagige, Kunststofffolienstreifen des Verstärkungsbereichs, insbesondere der Fortsetzungsabschnitt von der Außenlage, und die mindestens eine innenliegende Lage, insbesondere die Innenlage, von Vorder- und Rückwand sowie die mit der Vorderwand und mit der Rückwand verbundenen Halteschlaufen, insbesondere deren erste und/oder zweite flexible Kunststoffmaterialstreifen und/oder der ein- oder mehrlagige, keinen Hohlkörper bildende Materialstreifen, sowie die erste und die zweite Seitenwand aus Polyolefinen, bevorzugt Polyethylen, besonders bevorzugt HD- oder LD-Polyethylen, insbesondere LD-Polyethylen, gebildet sind oder bestehen.

Vorzugsweise wird für sämtliche Komponenten der erfindungsgemäßen Kunststofftragetasche, zum Beispiel für die Innen- und Außenlage von Vorder- und Rückwand und für die Halteschlaufen von Vorder- und Rückwand sowie für die erste und zweite Seitenwand durchgängig ein einheitliches Kunststoffmaterial, beispielsweise Polypropylen oder Polyethylen, bevorzugt Polyethylen und besonders bevorzugt auf LD-Polyethylen zurückgegriffen. Hierdurch erhält man eine sortenreine Kunststofftragetasche, die sich als solche unproblematisch recyceln lässt.

Des Weiteren sind unter den erfindungsgemäßen Kunststofftragetaschen solche besonders geeignet, bei denen die mindestens eine innenliegende Lage, insbesondere die Innenlage, von Vorder- und/oder, insbesondere und, Rückwand eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt. Hierdurch kann eine textilartige Anmutung in der Handhabung, beispielsweise beim Zusammenfalten, der erfindungsgemäßen Kunststofftragetasche verstärkt werden. Auch kann in entsprechender Weise der erste flexible, insbesondere schlauchförmige, Hohlkörper oder der ein- oder mehrlagige, keinen Hohlkörper bildende Materialstreifen eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfassen oder hieraus bestehen.

Besonders bevorzugt wird unter den Polyethylenen auf LD-Polyethylen zurückgegriffen.

In einer bevorzugten Ausgestaltung der erfindungsgemäßen Kunststofftragetasche kann vorgesehen sein, dass die mit der Vorderwand und/oder die mit der Rückwand, insbesondere innenseitig, verbundene Halteschlaufe jeweils in ihren ersten und zweiten Anbindungsbereichen, direkt oder indirekt, mit dem ein- oder mehrlagigen, insbesondere mehrlagigen, Kunststofffolienstreifen des Verstärkungsbereichs, und mit der mindestens einen innenliegenden Lage, insbesondere der Innenlage, und der Außenlage, verschweißt und/oder verklebt ist, wobei in diesen ersten und zweiten Anbindungsbereichen zumindest die Innenseite des zweiten Hohlkörpers der Halteschlaufe, insbesondere die nach innen gewandte Seite des zweiten flexiblen Kunststoffmaterialstreifens, mit der Außenseite des ersten Hohlkörpers oder der zugewandten Seite des ein- oder mehrlagigen, keinen Hohlkörper bildenden Materialstreifens, insbesondere der nach außen gewandten Seite des ersten flexiblen Kunststoffmaterialstreifens, verschweißt und/oder verklebt vorliegen.

Wenn die ersten und zweiten Anbindungsbereiche der Halteschlaufe unmittelbar an dem Kunststofffolienstreifen des Verstärkungsbereichs anliegen, findet die Verbindung mit der mindestens einen innenliegenden Lage, insbesondere der Innenlage, und der Außenlage regelmäßig indirekt, d.h. über die jeweils anliegende benachbarte Lage statt. In entsprechender Weise kann, wenn die ersten und zweiten Anbindungsbereiche der Halteschlaufe unmittelbar an der Außen- oder der Innenlage anliegen, die Verbindung mit der mindestens einen innenliegenden Lage, insbesondere der Innenlage, bzw.

der Außenlage sowie der/den Lagen des Kunststofffolienstreifens des Verstärkungsbereichs jeweils regelmäßig indirekt, d.h. über die jeweils anliegende benachbarte Lage stattfinden. In einigen Ausgestaltungen kann es beispielsweise bei der Verschweißung zu einer Vermengung des aufgeschmolzenen Materials der beteiligten Lagen kommen, so dass nicht mehr eindeutig eine Zuordnung des Materials zu den Lagen möglich ist.

Insbesondere zur Erzeugung einer angenehmen Haptik, welche derjenigen von Textilhalteschlaufen nahekommt, hat es sich als vorteilhaft erwiesen, dass der erste flexible, insbesondere schlauchförmige, Hohlkörper, insbesondere der erste flexible Kunststoffmaterialstreifen, oder der ein- oder mehrlagige, keinen Hohlkörper bildende Materialstreifen und/oder der zweite flexible, insbesondere schlauchförmige, Hohlkörper, insbesondere der zweite flexible Kunststoffmaterialstreifen, der Halteschlaufe von Vorder- und/oder Rückwand mindestens abschnittsweise, insbesondere vollflächig, ein Prägemuster aufweisen. Derartige Prägemuster lassen sich zum Beispiel bei Verwendung thermoplastischer Kunststoffe, beispielsweise von Polyolefinen, durch Einwirkung von Wärme und Druck zuverlässig und dauerhaft erzeugen.

Für viele Ausführungsformen der erfindungsgemäßen Kunststofftragetaschen hat es sich als pragmatisch erwiesen, den Öffnungsrand durch eine Faltung am oberen Ende der Außenlage oder im Übergangsbereich von der Außenlage zu dem Fortsetzungsabschnitt zu bilden.

Eine Verbindung bzw. Verschweißung des Kunststofffolienstreifens bzw. des Fortsetzungsabschnitts von Vorder- und/oder Rückwand mit der mindestens einen innenliegenden Lage, insbesondere der Innenlage, beispielsweise der Innenseite der Innenlage, beinhaltet vorzugsweise die Verbindung sämtlicher hier aneinander anliegenden Lagen. Das gleiche trifft im Allgemeinen auf die Anbindung des Kunststofffolienstreifens bzw. des Fortsetzungsabschnitts von Vorder- und/oder Rückwand mit der Außenlage zu.

In einer besonders vorteilhaften Ausführungsform ist vorgesehen, dass zusätzlich die Außenlage von Vorder- und/oder Rückwand mit der Außenseite der mindestens einen innenliegenden Lage, insbesondere der Innenlage, entlang der Erstreckung von oder beabstandet von dem ersten Seitenrand in Richtung des oder bis zum zweiten Seitenrand, insbesondere mit einer kontinuierlichen Längsschweißung, unter Ausbildung eines zweiten Verbindungsstreifens verschweißt und/oder verklebt ist, wobei dieser zweite Verbindungsstreifen vorzugsweise näher beabstandet zum unteren Rand des Verstärkungsbereichs als zu dessen oberen Rand vorliegt, insbesondere am oder benachbart zum unteren Rand des Verstärkungsbereichs. Hierdurch wird ein nochmals verstärkter Öffnungsrand erhalten. Dabei ist ganz besonders bevorzugt, wenn der erste und der zweite Verbindungsstreifen mindestens abschnittsweise, vorzugsweise vollständig, im Wesentlichen überlappend vorliegen.

Die erfindungsgemäßen Kunststofftragetasche, insbesondere die sortenreine erfindungsgemäßen Kunststofftragetasche, kann dabei derart ausgestaltet sein, dass die Außenlage, der ein- oder mehrlagige, insbesondere doppellagige, Kunststofffolienstreifen des Verstärkungsbereichs, insbesondere der Fortsetzungsabschnitt von Innen- oder Außenlage, und/oder die mindestens eine innenliegende Lage, insbesondere die Innenlage, von Vorder- und/oder Rückwand, die erste und die zweite Seitenwand sowie die mit der Vorderwand und/oder mit der Rückwand verbundenen Halteschlaufen, insbesondere deren erste und/oder zweite flexible Kunststoffmaterialstreifen oder der mehrlagige, keinen Hohlkörper bildende Materialstreifen, recyceltes Kunststoffmaterial enthalten oder hieraus bestehen, insbesondere recycelte Polyolefine, beispielsweise Polyethylen.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:

Figur 1     eine schematische Vorderseitenansicht einer bevorzugten Ausführungsform einer erfindungsgemäßen Kunststofftragetasche;

Figur 2     eine schematische Seitenansicht des Zuschnitts einer Seitenwand der erfindungsgemäßen Kunststofftragetasche gemäß Figur 1;

Figur 3     eine schematische perspektivische Ansicht der erfindungsgemäßen Kunststofftragetasche gemäß Figur 1;

Figur 4     eine schematische Draufsicht auf die Bodenfläche der erfindungsgemäßen Kunststofftragetasche gemäß Figur 1;

Figur 5     eine schematische Draufsicht auf einen Zuschnitt für einen Taschenkorpus aus Vorder- und Rückwand der erfindungsgemäßen Kunststofftragetasche gemäß Figur 1;

Figur 6     eine schematische Querschnittsansicht eines Ausschnitts des oberen Bereichs der erfindungsgemäßen Kunststofftragetasche gemäß Figur 1;

Figur 7     eine schematische Vorderseitenansicht einer weiteren Ausführungsform einer erfindungsgemäßen Kunststofftragetasche;

Figur 8     eine schematische Vorderseitenansicht einer weiteren Ausführungsform einer erfindungsgemäßen Kunststofftragetasche;

Figur 9     eine schematische Draufsicht auf einen Zuschnitt für einen Taschenkorpus aus Vorder- und Rückwand der erfindungsgemäßen Kunststofftragetasche gemäß Figur 7; und

Figur 10     eine schematische Draufsicht auf einen Zuschnitt für einen Taschenkorpus aus Vorder- und Rückwand der erfindungsgemäßen Kunststofftragetasche gemäß Figur 8.

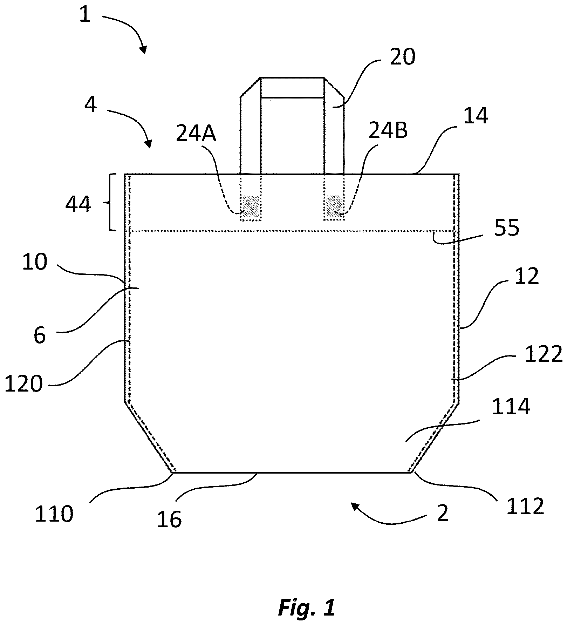

Figur 1 zeigt eine schematische Vorderseitenansicht einer erfindungsgemäßen Kunststofftragetasche (1). In der dargestellten Ausführungsform geht am Bodenende (2) die doppellagige Vorderwand (6) mittels Umschlagens einstückig in die doppellagige Rückwand (8) unter Ausbildung einer Bodenfalte (16) im Übergang über. D.h. die Innenlagen (28, 32) von Vorder- und Rückwand (6, 8) sind einstückig ausgebildet, und auch die Außenlagen (30, 34) von Vorder- und Rückwand (6, 8) sind ebenfalls einstückig ausgebildet. Die Bodenfalte (16) hat eine laterale Erstreckung von dem ersten (110) bis zum gegenüberliegenden zweiten Ende (112), die geringer ist als die laterale Erstreckung von Vorder- und Rückwand im Bereich des Öffnungsendes (4). In dem Verjüngungs-/Bodenflächenbereich (114, 114'), der im unteren Drittel der erfindungsgemäßen Kunststofftragetasche liegt, laufen die ersten und zweiten Seitenränder (10, 12) von Vorder- und Rückwand (6, 8) in einem stumpfen Winkel geradlinig auf das erste bzw. zweite Ende (110, 112) der Bodenfalte (16) zu. Die Vorder- und die Rückwand (6, 8) sind mittels im Bereich der ersten und zweiten Seitenränder (10, 12) verlaufender Schweißnähte (120, 122) mit der ersten und der zweiten Seitenwand (102, 104) miteinander verbunden (nicht abgebildet). Die Vorder- und die Rückwand (6, 8) verfügen im Bereich des Öffnungsendes (4) über einen sich bis zum Öffnungsende erstreckenden Verstärkungsbereich (44, 46), enthaltend jeweils einen innenseitig an der Vorderwand (6) bzw. innenseitig an der Rückwand (8) befestigten und sich jeweils von dem ersten Seitenrand (10) bis zum zweiten Seitenrand (12) erstreckenden doppellagigen Kunststofffolienstreifen (106, 108). Dieser doppellagige Kunststofffolienstreifen (106, 108) kann eine separate Komponente sein, stellt jedoch bevorzugt einen integralen, d.h. einstückigen Bestandteil der Außenlage dar und wird demgemäß aus einem Fortsetzungsabschnitt der Außenlage von Vorder- bzw. Rückwand gebildet. Dieser Fortsetzungsabschnitt bildet durch Umschlagen zunächst den Öffnungsrand (14) aus. Durch nochmaliges Umschlagen, insbesondere zur Innenseite der Innenwand gewandt, wird durch die damit einhergehende Doppellagigkeit eine besondere Verstärkung im oberen Bereich der Tragetasche erzielt. In der dargestellten Ausführungsform ist dieser Fortsetzungsabschnitt entlang eines Verbindungsstreifens (55) mit der Innenlage (28) und, über diese, auch mit der Außenlage (30) verschweißt. Entsprechendes gilt für die Rückwand (8) (nicht abgebildet). Die Vorderwand (6) und die Rückwand (8) sind jeweils mit einer Halteschlaufe (20, 22) über ihre ersten und zweiten Anbindungsbereiche (24A, 24B; 26A, 26B) mit dem Taschenkorpus verbunden. Die ersten und zweiten Anbindungsbereiche (24A, 24B; 26A, 26B) der Halteschlaufen (20, 22) für Vorder- und Rückwand liegen dabei vollständig in den jeweiligen Verstärkungsbereichen (44, 46) vor und weisen keine Überlappung mit dem Verbindungsstreifen (55) auf.

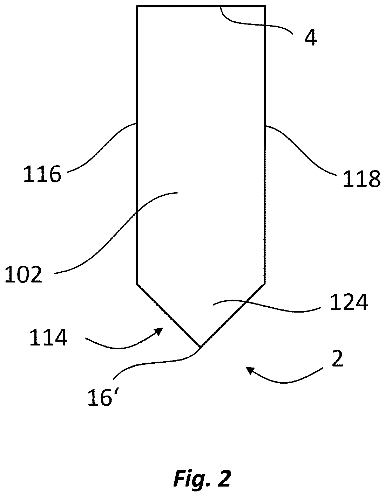

Figur 2 zeigt eine schematische Seitenansicht des Zuschnitts einer ersten Seitenwand (102) der erfindungsgemäßen Kunststofftragetasche (1) gemäß Fig. 1. Die ersten und zweiten Seitenränder (116, 118) verlaufen in dem Bereich beginnend mit dem oberen Ende (4) der erfindungsgemäßen Kunststofftragetasche (1) parallel zueinander. Dort, wo die erfindungsgemäßen Kunststofftragetasche (1) in den Verjüngungs-/Bodenflächenbereich (114, 114') übergeht (siehe Fig. 1), endet der parallele Verlauf dieser Seitenränder und sie laufen symmetrisch aufeinander zu, um sich in einem Punkt (16') zu treffen, der auf der longitudinalen Mittelachse der Seitenwand liegt. Diese sich verjüngenden Abschnitte (124, 126) der ersten und zweiten Seitenwand (102, 104) haben in bevorzugten Ausgestaltungen Dreiecksform. Handelt es sich bei dieser Seitenwand um eine Seitenfaltenwand, verläuft die Seitenfalte regelmäßig entlang der longitudinalen Mittelachse.

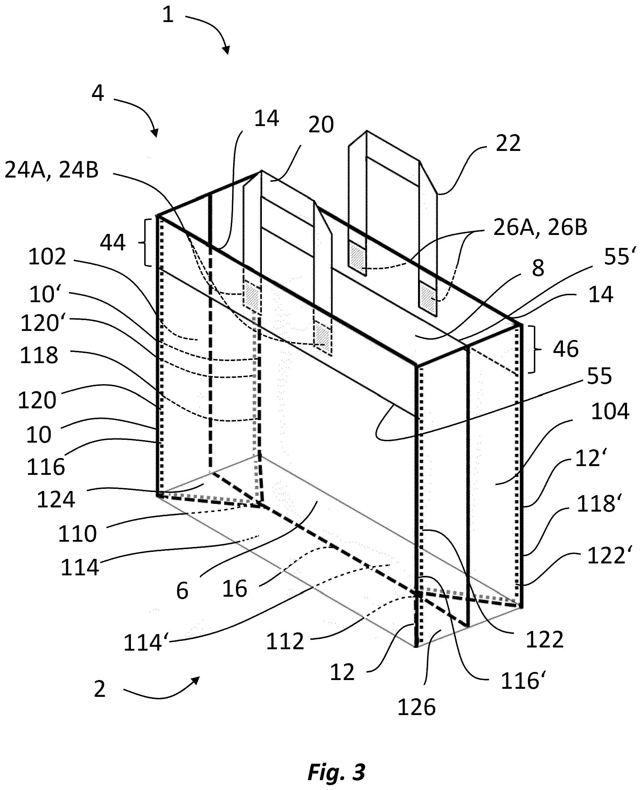

Aus Figur 3 geht eine schematische perspektivische Ansicht der erfindungsgemäßen Kunststofftragetasche (1) gemäß Fig. 1 im aufgestellten Befüllzustand hervor. Die Bodenfläche wird in diesem aufgestellten Zustand durch Teile der Vorder- und Rückwand (6, 8) im Verjüngungs-/Bodenflächenbereich (114, 114') sowie durch die dreieckförmigen Verjüngungs-/Bodenflächenbereiche (124, 126) der ersten und zweiten Seitenwand (102, 104) gebildet. Die Seitenwände (102, 104) sind in der dargestellten Ausführungsform entlang ihrer Seitenränder (116, 118; 116', 118') mit den Innenseiten von Vorder- und Rückwand (6, 8), ebenfalls entlang deren Seitenränder (10, 12; 10', 12'), unter Ausbildung von Schweißnähten (120, 122; 120', 122') verschweißt.

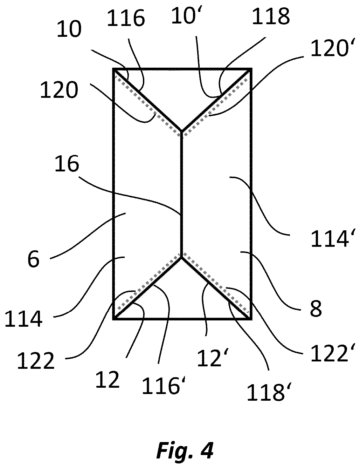

Figur 4 zeigt eine schematische Draufsicht auf die Bodenfläche der erfindungsgemäßen Kunststofftragetasche (1) im Befüllzustand.

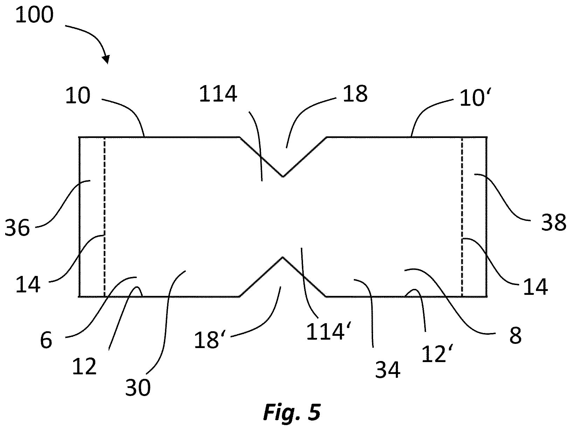

Figur 5 zeigt eine schematische Draufsicht auf einen Zuschnitt (100) für die Außenlage (30, 34) von Vorder- und Rückwand (6, 8) der erfindungsgemäßen Kunststofftragetasche (1). Die Außenlage von Vorder- und Rückwand (6, 8) sind einstückig ausgebildet. Sie enthalten jeweils ebenfalls die jeweiligen Fortsetzungsabschnitte (36, 38), die mittels Umschlagens den Öffnungsrand (14) und den doppellagigen Kunststoffmaterialstreifen des Verstärkungsbereichs (44, 46) bilden. Im Bereich des Übergangs von Vorder- zu Rückwand liegen dreieckförmige Materialauslassungen (18, 18') vor, die nach dem Umschlagen von Vorder- und Rückwandabschnitt aufeinander, einschließlich der einstückigen Innenlagen von Vorder- und Rückwand (nicht abgebildet), und Zusammenfügen derselben mit der korrespondierend geformten ersten bzw. zweiten Seitenwand den Verjüngungs-/Bodenflächenbereich (114, 114') bilden.

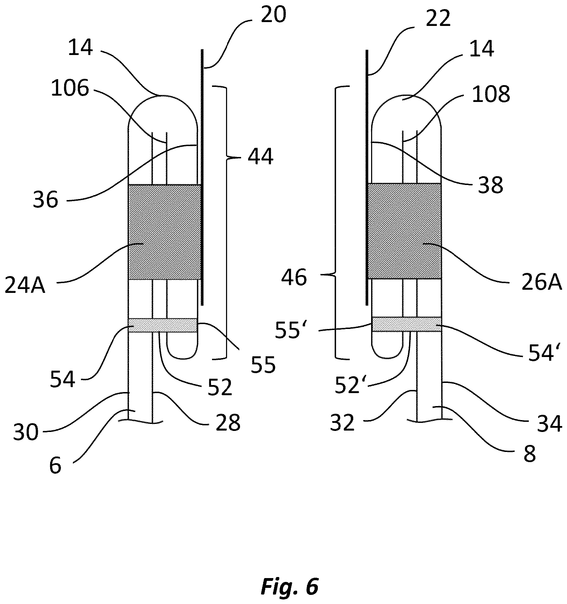

Figur 6 zeigt den oberen Bereich der erfindungsgemäßen Kunststofftragetasche (1). Die Fortsetzungsabschnitte (36, 38) liegen umgeschlagen um die Innenlagen (28, 32) wie auch nochmal um sich selbst nach innen umgeschlagen und damit doppellagig vor. Diese doppellagigen Fortsetzungsabschnitte (36, 38) sind miteinander verschweißt, mit der Innenseite der Innenlage (28, 32) unter Ausbildung der Verbindungsbereiche (52, 52') verschweißt, ferner ist die Innenlage (28, 32) auch mit den jeweiligen Außenlage (30, 34) unter Ausbildung der Verbindungsbereiche (54, 54') verschweißt. Die Verbindungsbereiche (52, 52') und (54, 54') liegen dabei in der dargestellten Ausführungsform jeweils überlappend vor und bilden einen einheitlichen Verschweißungsabschnitt (55, 55') aus, der insbesondere auch in einem einzigen Verschweißungsschritt erhalten werden kann. Die in Figur 6 ebenfalls ausschnittsweise dargestellten Halteschlaufen (20, 22) sind in den dargestellten ersten Anbindungsbereichen (24A, 26A) innenseitig mit den umgeschlagenen doppellagig ausgestalteten Fortsetzungsabschnitten (36, 38) verschweißt. Ferner liegen in diesen Anbindungsbereichen (24A, 26A) die Außenlage (30, 34, die Innenlage (28, 30) und der umgeschlagene Fortsetzungsabschnitt (36, 38) jeweils miteinander verschweißt vor. Auf diese Weise wird eine sehr stabile, mechanisch stark belastbare Kunststofftragetasche (1) erhalten. Außerdem kann durch die dargestellte innenseitige Anbringung der Halteschlaufen ein komplikationsloses Befüllen der erfindungsgemäßen Kunststofftragetaschen sichergestellt werden. Die oberen Enden bzw. Öffnungsränder werden mithilfe der Trageschlaufen daran gehindert, als Stoßkanten beim Befüllen mit Stückgut zu dienen.

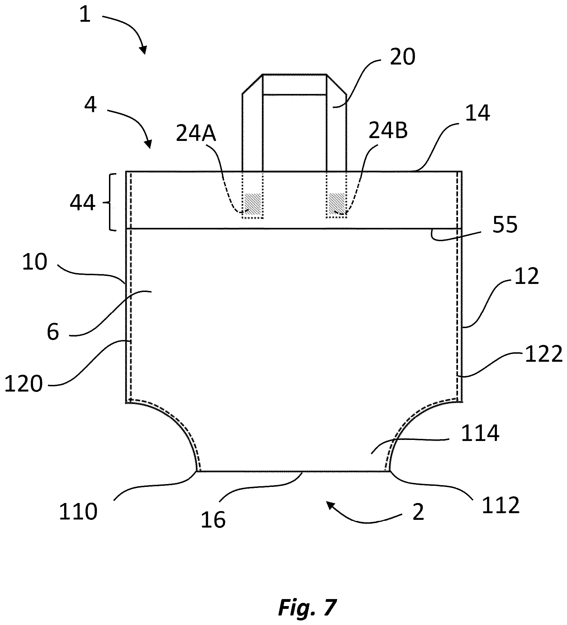

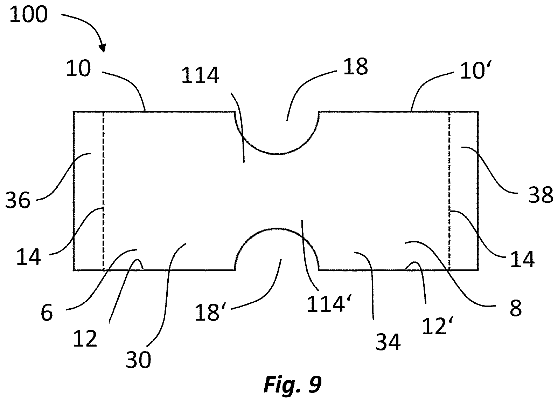

Figur 7 gibt eine schematische Vorderseitenansicht einer weiteren Ausführungsform einer erfindungsgemäßen Kunststofftragetasche wieder. Diese Ausführungsform unterscheidet sich von der Ausführungsform gemäß Figur 1 dadurch, dass in dem Verjüngungs-/Bodenflächenbereich (114), der im unteren Drittel der erfindungsgemäßen Kunststofftragetasche liegt, die ersten und zweiten Seitenränder (10, 12) von Vorder- und Rückwand (6, 8) sich konkavförmig gebogen in Richtung des ersten bzw. zweiten Endes (110, 112) der Bodenfalte (16) verjüngen. Figur 9 zeigt eine schematische Draufsicht auf einen Zuschnitt (100) für die Außenlage (30, 34) von Vorder- und Rückwand (6, 8) dieser Ausführungsform einer erfindungsgemäßen Kunststofftragetasche (1). Die Außenlage von Vorder- und Rückwand (6, 8) sind auch hier einstückig ausgebildet. Sie enthalten jeweils ebenfalls die jeweiligen Fortsetzungsabschnitte (36, 38), die mittels Umschlagens den Öffnungsrand (14) und den doppellagigen Kunststoffmaterialstreifen des Verstärkungsbereichs (44, 46) bilden. Im Bereich des Übergangs von Vorder- zu Rückwand liegen halbkreisförmige Materialauslassungen (18, 18') vor, die nach dem Umschlagen von Vorder- und Rückwandabschnitt aufeinander, einschließlich der einstückigen Innenlagen von Vorder- und Rückwand, und Zusammenfügen mit der ersten und der zweiten Seitenwand den Verjüngungs-/Bodenflächenbereich (114, 114') bilden.

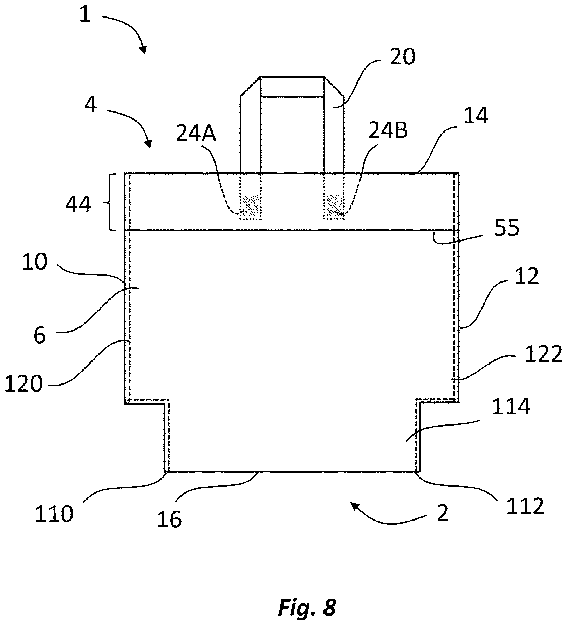

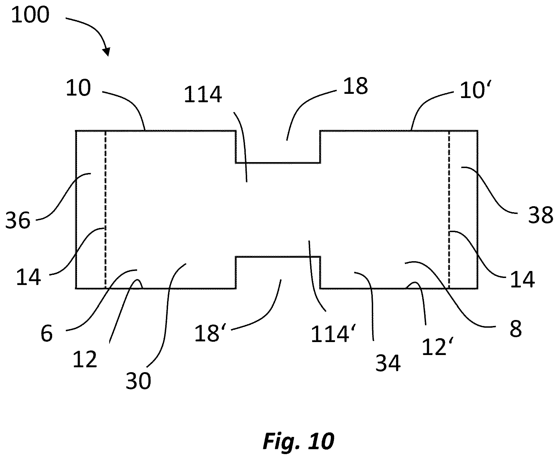

Figur 8 zeigt eine schematische Vorderseitenansicht einer weiteren Ausführungsform einer erfindungsgemäßen Kunststofftragetasche. Diese Ausführungsform unterscheidet sich von der Ausführungsform gemäß Figur 1 dadurch, dass in dem Verjüngungs-/Bodenflächenbereich (114), der im unteren Drittel der erfindungsgemäßen Kunststofftragetasche liegt, die ersten und zweiten Seitenränder (10, 12) von Vorder- und Rückwand (6, 8) sich übergangslos, d.h. unter Ausbildung jeweils eines rechten Winkels verjüngen. Der so erhaltene Verjüngungs-/Bodenflächenbereich (114) verfügt sodann bis zur Bodenfalte (16) über eine einheitliche Breite bzw. laterale Erstreckung. Figur 10 zeigt eine schematische Draufsicht auf einen Zuschnitt (100) für die Außenlage (30, 34) von Vorder- und Rückwand (6, 8) dieser Ausführungsform einer erfindungsgemäßen Kunststofftragetasche (1). Die Außenlage von Vorder- und Rückwand (6, 8) sind auch hier einstückig ausgebildet. Sie enthalten jeweils ebenfalls die jeweiligen Fortsetzungsabschnitte (36, 38), die mittels Umschlagens den Öffnungsrand (14) und den doppellagigen Kunststoffmaterialstreifen des Verstärkungsbereichs (44,46) bilden. Im Bereich des Übergangs von Vorder- zu Rückwand liegen, wie in Figur 10 gezeigt, rechteckförmige Materialauslassungen (18, 18') vor, die nach dem Umschlagen von Vorder- und Rückwandabschnitt aufeinander, einschließlich der einstückigen Innenlagen von Vorder- und Rückwand, und Zusammenfügen mit der ersten und der zweiten Seitenwand den Verjüngungs-/Bodenflächenbereich (114, 114') bilden.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

**Patentansprüche**

1. Kunststofftragetasche (1) mit einem Bodenende (2) und einem gegenüberliegenden Öffnungsende (4), umfassend eine Vorderwand (6) und eine Rückwand (8), jeweils mit einem ersten Seitenrand (10, 10') und einem gegenüberliegenden zweiten Seitenrand (12, 12') sowie einem Öffnungsrand (14), sowie eine erste (102) und eine gegenüberliegende zweite Seitenwand (104) mit jeweils einem ersten und einem gegenüberliegenden zweiten Seitenrand (116, 118) sowie mindestens eine mit der Vorderwand (6) und/oder, insbesondere und, mindestens eine mit der Rückwand (8) verbundene Halteschlaufe (20, 22) mit jeweils einem ersten und einem zweiten Anbindungsbereich (24A, 24B; 26A, 26B),

wobei die Vorder- und die Rückwand (6, 8) mehrlagig, insbesondere doppellagig, ausgestaltet sind, umfassend mindestens eine innenliegende Lage, insbesondere eine Innenlage, und eine Außenlage (28, 30; 32, 34), wobei die Vorder- und die Rückwand (6, 8) im Bereich des Öffnungsendes (4) einen, insbesondere sich bis zum Öffnungsende erstreckenden oder dieses umfassenden, Verstärkungsbereich (44,46) aufweist, enthaltend mindestens einen innen- oder außenseitig, insbesondere innenseitig, an der Vorderwand (6) befestigten und mindestens einen innen- oder außenseitig, insbesondere innenseitig, an der Rückwand (8) befestigten und sich jeweils von oder beabstandet von dem ersten Seitenrand (10, 10') in Richtung des oder bis zum zweiten Seitenrand (12, 12') erstreckenden mehrlagigen, insbesondere doppellagigen, Kunststofffolienstreifen (106, 108),

**dadurch gekennzeichnet, dass**

die mindestens eine innenliegende Lage (28), insbesondere die Innenlage, der Vorderwand (6) und die mindestens eine innenliegende Lage (32), insbesondere die Innenlage, der Rückwand (8) einstückig ausgebildet sind,

dass die Außenlagen (30, 34) von Vorder- und Rückwand (6, 8) einstückig ausgebildet sind und

dass die Vorderwand (6) und die Rückwand (8) am Bodenende (2) mittels Umschlagens ineinander übergehen, insbesondere in diesem Übergang (16) eine Bodenfalte bilden,

wobei der Übergang (16), insbesondere die Bodenfalte, sich lateral von einem ersten (110) bis zu einem gegenüberliegenden zweiten Ende (112) erstreckt,

wobei bei bis zum Übergang (16), insbesondere der Bodenfalte, aneinander anliegender Vorder -und Rückwand (auch "stapelbarer Lagerzustand" genannt) die laterale Ausdehnung des Übergangs (16), insbesondere der Bodenfalte, zwischen dem ersten und zweiten Ende (110, 112) geringer ist als die Ausdehnung der Vorder- und der Rückwand zwischen dem jeweiligen ersten und dem zweiten Seitenrand (10, 12, 10', 12') am Öffnungsende (4),

wobei sich die Ausdehnung von Vorder- und Rückwand (6, 8) zwischen dem jeweiligen ersten und zweiten Seitenrand (10, 12, 10', 12') im Bereich (114) des unteren Drittels, insbesondere des unteren Viertels, bezogen auf die Erstreckung zwischen Öffnungsende (4) und Bodenende (2), in Richtung des und insbesondere bis zum Übergang (16), insbesondere zur Bodenfalte, verjüngt (auch "Verjüngungs- /Bodenflächenbereich" genannt),
wobei die seitliche Ausdehnung der ersten und der zweiten Seitenwand (102, 104) im Verjüngungs-/Bodenflächenbereich (114) korrespondierend zu dem Bereich, in dem sich die Ausdehnung von Vorder- und Rückwand (6, 8) zwischen dem jeweiligen ersten und zweiten Seitenrand (10, 12, 10', 12') verjüngt, jeweils, insbesondere in entsprechender Weise, abnimmt,
wobei die erste Seitenwand (102) im Verjüngungs-/Bodenflächenbereich (114) im Bereich ihres ersten Seitenrandes (116) mit der Vorderwand (6), insbesondere entlang deren erstem Seitenrand (10), und im Bereich des zweiten Seitenrands (118) mit der Rückwand (8), insbesondere entlang deren erstem Seitenrand (10'), verschweißt ist und
wobei die zweite Seitenwand (104) im Verjüngungs-/Bodenflächenbereich (114) im Bereich ihres ersten Seitenrandes (116) mit der Vorderwand (6), insbesondere entlang deren zweitem Seitenrand (12), und im Bereich des zweiten Seitenrands (118) mit der Rückwand (8), insbesondere entlang deren zweitem Seitenrand (12'), verschweißt ist,
wobei in dem Abschnitt, der nicht der Verjüngungs-/Bodenflächenbereich (114) ist, die erste Seitenwand (102) im Bereich ihres ersten Seitenrandes (116) mit der Vorderwand (6) und im Bereich des zweiten Seitenrands (118) mit der Rückwand (8) verschweißt ist und
wobei in dem Abschnitt, der nicht der Verjüngungs-/Bodenflächenbereich (114) ist, die zweite Seitenwand (104) im Bereich ihres ersten Seitenrandes (116) mit der Vorderwand (6) und im Bereich des zweiten Seitenrands (118) mit der Rückwand verschweißt ist.

2. Kunststofftragetasche (1) nach Anspruch 1, **dadurch gekennzeichnet, dass** der erste und der zweite Seitenrand der ersten Seitenwand (102) sich im Verjüngungs-/Bodenflächenbereich (114), insbesondere stetig, annähern und insbesondere im Bereich des Übergangs (16), vorzugsweise der Bodenfalte, zusammenlaufen und dass
der erste und der zweite Seitenrand der zweiten Seitenwand (104) sich im Verjüngungs-/Bodenflächenbereich (114), insbesondere stetig, annähern und insbesondere im Bereich des Übergangs (16), vorzugsweise der Bodenfalte, zusammenlaufen.

3. Kunststofftragetasche (1) nach Anspruch 1 oder 2, **dadurch gekennzeichnet, dass** in dem Abschnitt, der nicht der Verjüngungs-/Bodenflächenbereich (114) ist, die erste Seitenwand (102) im Bereich ihres ersten Seitenrandes (116) mit der Vorderwand (6) entlang deren erstem Seitenrand (10) und im Bereich des zweiten Seitenrands (118) mit der Rückwand (8) entlang deren erstem Seitenrand (10') verschweißt ist und dass
in dem Abschnitt, der nicht der Verjüngungs-/Bodenflächenbereich (114) ist, die zweite Seitenwand (104) im Bereich ihres ersten Seitenrandes (116) mit der Vorderwand (6) entlang deren zweitem Seitenrand (12) und im Bereich des zweiten Seitenrands (118) mit der Rückwand entlang deren zweitem Seitenrand (12') verschweißt ist.

4. Kunststofftragetasche (1) nach einem der vorangehenden Ansprüche, **dadurch gekennzeichnet, dass** die Erstreckung von dem ersten bis zum zweiten Seitenrand der ersten Seitenwand der Summe aus der Erstreckung des Verjüngungs-/Bodenflächenbereichs der Vorderwand, gerechnet vom Übergang (16), insbesondere der Bodenfalte, und der Erstreckung des Verjüngungs-/Bodenflächenbereichs der Rückwand, gerechnet vom Übergang (16), insbesondere der Bodenfalte, im Wesentlichen entspricht, insbesondere entspricht, und/oder, insbesondere und, dass die Erstreckung von dem ersten bis zum zweiten Seitenrand der zweiten Seitenwand der Summe aus der Erstreckung des Verjüngungs-/Bodenflächenbereichs der Vorderwand, gerechnet vom Übergang (16), insbesondere der Bodenfalte, und der Erstreckung des Verjüngungs-/Bodenflächenbereichs der Rückwand, gerechnet vom Übergang (16), insbesondere der Bodenfalte, im Wesentlichen entspricht, insbesondere entspricht.

5. Kunststofftragetasche (1) nach einem der vorangehenden Ansprüche, **dadurch gekennzeichnet, dass** die erste und die zweite Seitenwand (102, 104) im Verjüngungs-/Bodenflächenbereich (114) dreieckförmig, halbkreisförmig, rechteckförmig oder quadratisch, insbesondere dreieckförmig, ausgestaltet sind.

6. Kunststofftragetasche (1) nach einem der vorangehenden Ansprüche, **dadurch gekennzeichnet, dass** benachbart zum oder im Bereich des ersten Endes des Übergangs (16), insbesondere der Bodenfalte, die erste Seitenwand (102), die Vorderwand und die Rückwand in einem ersten Areal miteinander verschweißt vorliegen und/oder, insbesondere und, dass benachbart zum oder im Bereich des zweiten Endes des Übergangs (16), insbesondere der Bodenfalte, die zweite Seitenwand (104), die Vorderwand und die Rückwand in einem zweiten Areal miteinander verschweißt vorliegen.

7. Kunststofftragetasche (1) nach Anspruch 6, **dadurch gekennzeichnet, dass** im ersten Areal und im zweiten Areal jeweils eine fünf-, sechs-, sieben- oder achtlagige Verschweißung, insbesondere eine sechs- oder achtlagige Verschweißung, vorliegt.

**8.** Kunststofftragetasche (1) nach einem der vorangehenden Ansprüche, **dadurch gekennzeichnet, dass**

sich die Vorderwand vom dem dem Öffnungsende zugewandten Beginn des Verjüngungs-/Bodenflächenbereichs am ersten Seitenrand bis zum ersten Ende (110) des Übergangs (16), insbesondere der Bodenfalte, geradlinig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, geradlinig verjüngt und dass sich die Rückwand vom dem dem Öffnungsende zugewandten Beginn des Verjüngungs-/Bodenflächenbereichs am ersten Seitenrand bis zum ersten Ende (110) des Übergangs (16), insbesondere der Bodenfalte, geradlinig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, geradlinig verjüngt

oder

dass sich die Vorderwand (6) vom dem dem Öffnungsende zugewandten Beginn des Verjüngungs-/Bodenflächenbereichs am ersten Seitenrand bis zum ersten Ende (110) des Übergangs (16), insbesondere der Bodenfalte, konkavförmig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, konkavförmig verjüngt und dass sich die Rückwand (8) vom dem dem Öffnungsende zugewandten Beginn des Verjüngungs-/Bodenflächenbereichs am ersten Seitenrand bis zum ersten Ende (110) des Übergangs (16), insbesondere der Bodenfalte, konkavförmig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, konkavförmig verjüngt

oder

dass sich die Vorderwand (6) vom dem dem Öffnungsende zugewandten Beginn des Verjüngungs-/Bodenflächenbereichs am ersten Seitenrand bis zum ersten Ende (110) des Übergangs (16), insbesondere der Bodenfalte, konvexförmig verjüngt und/oder, insbesondere und, dass sich die Vorderwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, konvexförmig verjüngt und dass sich die Rückwand (8) vom dem dem Öffnungsende zugewandten Beginn des Verjüngungs-/Bodenflächenbereichs am ersten Seitenrand bis zum ersten Ende (110) des Übergangs (16), insbesondere der Bodenfalte, konvexförmig verjüngt und/oder, insbesondere und, dass sich die Rückwand vom dem dem Öffnungsende zugewandten Beginn des Verjüngungs-/Bodenflächenbereichs am zweiten Seitenrand bis zum zweiten Ende (112) des Übergangs (16), insbesondere der Bodenfalte, konvexförmig verjüngt

oder

dass sich die Vorderwand (6) an dem dem Öffnungsende zugewandten Beginn des Verjüngungs-/Bodenflächenbereichs am ersten Seitenrand in Richtung des gegenüberliegenden zweiten Seitenrands in einem ersten Abschnitt verjüngt und in dem sich bis zum ersten Ende (110) des Übergangs (16), insbesondere der Bodenfalte, anschließenden Abschnitt weniger stark oder nicht mehr verjüngt und/oder, insbesondere und,

dass sich die Vorderwand (6) an dem dem Öffnungsende zugewandten Beginn des Verjüngungs-/Bodenflächenbereichs am zweiten Seitenrand in Richtung des gegenüberliegenden ersten Seitenrands in einem ersten Abschnitt verjüngt und in dem sich bis zum zweiten Ende (112) des Übergangs (16), insbesondere der Bodenfalte, anschließenden Abschnitt weniger stark oder nicht mehr verjüngt und dass sich die Rückwand (6) an dem dem Öffnungsende zugewandten Beginn des Verjüngungs-/Bodenflächenbereichs am ersten Seitenrand in Richtung des gegenüberliegenden zweiten Seitenrands in einem ersten Abschnitt verjüngt und in dem sich bis zum ersten Ende (110) des Übergangs (16), insbesondere der Bodenfalte, anschließenden Abschnitt weniger stark oder nicht mehr verjüngt und/oder, insbesondere und,

dass sich die Rückwand (8) an dem dem Öffnungsende zugewandten Beginn des Verjüngungs-/Bodenflächenbereichs am zweiten Seitenrand in Richtung des gegenüberliegenden ersten Seitenrands in einem ersten Abschnitt verjüngt und in dem sich bis zum zweiten Ende (112) des Übergangs (16), insbesondere der Bodenfalte, anschließenden Abschnitt weniger stark oder nicht mehr verjüngt.

**9.** Kunststofftragetasche (1) nach einem der vorangehenden Ansprüche, **dadurch gekennzeichnet, dass**

die mit der Vorderwand (6) und die mit der Rückwand (8) verbundene Halteschlaufe (20, 22) jeweils in ihren ersten und zweiten Anbindungsbereichen (24A, 24B; 26A, 26B) mit dem mehrlagigen Kunststofffolienstreifen (106, 108) des Verstärkungsbereichs (44, 46) und auch mit der mindestens einen innenliegenden Lage (28, 32), insbesondere der Innenlage, und der Außenlage (30, 34) verschweißt ist und

wobei der mehrlagige Kunststofffolienstreifen (106) des Verstärkungsbereichs (44) der Vorderwand (6) mit der Innen- oder Außenlage von oder beabstandet von dem ersten Seitenrand (10) in Richtung des oder bis zum zweiten Seitenrand (12) mittels Verschweißung befestigt ist und wobei der mehrlagige Kunststofffolienstreifen (108) des Verstärkungsbereichs (46) der Rückwand (8) mit der Innen- oder Außenlage von oder beabstandet von dem ersten Seitenrand (10') in Richtung des oder bis zum zweiten Seitenrand (12') mittels Verschweißung befestigt ist,

wobei die ersten und zweiten Anbindungsbereiche (24A, 24B) der mit der Vorderwand (6) verbundenen Halteschlaufe (20) und die ersten und zweiten Anbindungsbereiche (26A, 26B) der mit der Rückwand (8) verbundenen Halteschlaufe (22) an der Innenseite von Vorder- bzw. Rückwand (6, 8) im Bereich des mehrlagigen Kunststofffolienstreifens (106, 108) des Verstärkungsbereichs (44, 46) vorliegen,

wobei sich an die Außenlage (30, 34) jeweils ein Fortsetzungsabschnitt (36, 38) anschließt,

wobei der Fortsetzungsabschnitt den Kunststofffolienstreifen (106, 108) des Verstärkungsbereichs (44,46) bildet,

wobei der Fortsetzungsabschnitt (36, 38) sich mindestens abschnittsweise entlang der Innenseite der mindestens einen innenliegenden Lage (28, 32), insbesondere der Innenlage, erstreckt und an dieser anliegt,

wobei dieser an der Innenseite der mindestens einen innenliegenden Lage (28, 32), insbesondere der Innenlage, vorliegende Fortsetzungsabschnitt (36, 38) mittels Umschlagens zumindest bereichsweise mindestens doppellagig ausgestaltet ist, wobei dieser Fortsetzungsabschnitt (36, 38) entlang einer Erstreckung von oder beabstandet von dem ersten Seitenrand (10, 10') in Richtung des oder bis zum zweiten Seitenrand (12, 12') mit der Innenseite der mindestens einen innenliegenden Lage (28, 32), insbesondere der Innenlage, verschweißt ist, insbesondere mit einer kontinuierlichen Längsschweißung, und

wobei die Außenlage (30, 34) von Vorder- und -Rückwand (6, 8), insbesondere im Übergang zum Fortsetzungsabschnitt (36, 38), den Öffnungsrand (14) umfasst oder bildet, und wobei die mindestens eine innenliegende Lage (28, 32), insbesondere die Innenlage, mit ihrem oberen Rand (40, 42) sich bis zum Öffnungsrand (14) oder beabstandet hiervon erstreckt,

wobei die Außenlage und der Fortsetzungsabschnitt (36) der Vorderwand (6) und die Außenlage und der Fortsetzungsabschnitt (38) der Rückwand (8) jeweils einstückig ausgebildet sind und

wobei der mehrlagige, insbesondere doppellagige, Kunststofffolienstreifen (106, 108) des Verstärkungsbereichs (44, 46) von Vorder- und Rückwand (6, 8) jeweils über seine sämtlichen Lagen mit der Innenseite der mindestens einen innenliegenden Lage (28, 32), insbesondere der Innenlage, entlang der Erstreckung von oder beabstandet von dem ersten Seitenrand (10, 10') in Richtung des oder bis zum zweiten Seitenrand (12, 12'), insbesondere mit einer kontinuierlichen Längsschweißung, unter Ausbildung eines ersten Verbindungsbereichs (52, 52'), insbesondere Verbindungsstreifens, verschweißt ist, wobei dieser erste Verbindungsbereich (52, 52'), insbesondere erste Verbindungsstreifen, jeweils näher beabstandet zum unteren Rand des Verstärkungsbereichs (44, 46) als zu dessen oberen Rand vorliegt, insbesondere am oder benachbart zum unteren Rand des Verstärkungsbereichs (44, 46),

wobei die Außenlage (30, 34) von Vorder- und Rückwand (6, 8) jeweils mit der Außenseite der mindestens einen innenliegenden Lage (28, 32), insbesondere der Innenlage, entlang der Erstreckung von oder beabstandet von dem ersten Seitenrand (10, 10') in Richtung des oder bis zum zweiten Seitenrand (12, 12'), insbesondere mit einer kontinuierlichen Längsschweißung, unter Ausbildung eines zweiten Verbindungsbereichs (54, 54'), insbesondere zweiten Verbindungsstreifens, verschweißt ist,

wobei dieser zweite Verbindungsbereich (54, 54'), insbesondere zweite Verbindungsstreifen, jeweils näher beabstandet zum unteren Rand des Verstärkungsbereichs (44, 46) als zu dessen oberen Rand vorliegt, insbesondere am oder benachbart zum unteren Rand des Verstärkungsbereichs (44, 46), wobei die mittels Verschweißung erhaltenen ersten und zweiten Anbindungsbereiche (24A, 24B, 26A, 26B) der mit der Vorderwand (6) und/oder, insbesondere und, mit der Rückwand (8) verbundenen Halteschlaufen (20, 22) beabstandet von dem ersten und zweiten Verbindungsbereichen (52, 52', 54, 54'), insbesondere den ersten und zweiten Verbindungstreifen, vorliegen, insbesondere keine Überlappung mit dem ersten und zweiten Verbindungsbereichen (52, 52', 54, 54') aufweisen,

wobei die mit der Vorderwand (6) und/oder die mit der Rückwand (8) innenseitig verbundene Halteschlaufe jeweils in ihren ersten und zweiten Anbindungsbereichen 24A, 24B, 26A, 26B), direkt oder indirekt, mit dem mehrlagigen Kunststofffolienstreifen (106, 108) des Verstärkungsbereichs (44, 46) und mit der mindestens einen innenliegenden Lage 28, 32), insbesondere der Innenlage, und der Außenlage (30, 34), verschweißt ist.

10. Kunststofftragetasche (1) nach einem der vorangehenden Ansprüche, **dadurch gekennzeichnet, dass** die erste und die zweite Seitenwand (102, 104) einlagig sind.

11. Kunststofftragetasche (1) nach einem der vorangehenden Ansprüche, **dadurch gekennzeichnet, dass** die erste und die zweite Seitenwand (102, 104) eine Seitenfalte aufweisen, die sich bevorzugt bis zum Übergang (16), besonders bevorzugt bis zur Bodenfalte, erstreckt.

12. Kunststofftragetasche (1) nach einem der vorangehenden Ansprüche, **dadurch gekennzeichnet, dass** die erste und die zweite Seitenwand (102, 104) am Öffnungsende (4) einen Saum aufweisen.

13. Kunststofftragetasche (1) nach einem der vorangehenden Ansprüche, **dadurch gekennzeichnet, dass** die erste und die zweite Seitenwand (102, 104) auf separaten Materialzuschnitten basieren.

14. Kunststofftragetasche (1) nach einem der vorangehenden Ansprüche, **dadurch gekennzeichnet, dass** die Bodenfalte (16) im aufgestellten Befüllungszustand der Kunststofftragetasche (1) eine nach außen gerichtete Bodenfalte darstellt.

15. Kunststofftragetasche (1) nach einem der vorangehenden Ansprüche, **dadurch gekennzeichnet, dass** die Außenlage auf einem mindestens abschnittweise transparenten Kunststoffmaterial, insbesondere Polyethylen, basiert oder hieraus besteht, das mindestens abschnittsweise innenseitig, insbesondere mittels Konterdruckverfahren, bedruckbar oder bedruckt ist und/oder dass die mindestens eine innenliegende Lage, insbesondere die Innenlage, mindestens abschnittsweise außenseitig bedruckbar oder bedruckt ist und dass die Außenlage auf einem mindestens abschnittweise transparenten Kunststoffmaterial, insbesondere Polyethylen, basiert oder hieraus besteht.

16. Kunststofftragetasche (1) nach einem der vorangehenden Ansprüche, **dadurch gekennzeichnet, dass** die Außenlage, der mehrlagige, insbesondere doppellagige, Kunststofffolienstreifen (106, 108) des Verstärkungsbereichs, insbesondere der Fortsetzungsabschnitt von Innen- und/oder Außenlage, insbesondere der Außenlage, und die mindestens eine innenliegende Lage (28, 32), insbesondere die Innenlage, von Vorder- und/oder Rückwand (6, 8), insbesondere von Vorder- und Rückwand (6, 8), sowie die mit der Vorderwand (6) und/oder mit der Rückwand (8) verbundenen Halteschlaufen, sowie die erste und die zweite Seitenwand (102, 104) aus Polyolefinen, bevorzugt Polyethylen, besonders bevorzugt HD- oder LD-Polyethylen, insbesondere LD-Polyethylen, gebildet sind oder bestehen.

17. Kunststofftragetasche (1) nach einem der vorangehenden Ansprüche, **dadurch gekennzeichnet, dass**

die mindestens eine innenliegende Lage, insbesondere die Innenlage, von Vorder- und Rückwand (6, 8) eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt, und/oder, insbesondere und, dass die Außenlage von Vorder- und Rückwand (6, 8) eine nicht geschäumte Kunststofffolie, vorzugsweise eine nicht geschäumte Polyolefinfolie, besonders bevorzugt eine nicht geschäumte Polyethylenfolie und insbesondere eine nicht geschäumte LD-Polyethylenfolie, umfasst oder darstellt.

18. Kunststofftragetasche (1) nach einem der vorangehenden Ansprüche, **dadurch gekennzeichnet, dass** die Außenlage, der mehrlagige, insbesondere doppellagige, Kunststofffolienstreifen (106, 108) des Verstärkungsbereichs, insbesondere der Fortsetzungsabschnitt der Außenlage, und die mindestens eine innenliegende Lage (28, 32), insbesondere die Innenlage, von Vorder- und Rückwand (8) sowie die mit der Vorderwand (6) und mit der Rückwand (8) verbundenen Halteschlaufen und die erste und die zweite Seitenwand (102, 104) aus Polyethylen, insbesondere LD-Polyethylen, gebildet sind oder bestehen, wobei die mindestens eine innenliegende Lage (28, 32), insbesondere die Innenlage, von Vorder- und Rückwand (8) eine geschäumte Polyethylenfolie, insbesondere eine geschäumte LD-Polyethylenfolie, darstellt, und wobei die Außenlage von Vorder- und/oder Rückwand (6, 8), und gegebenenfalls der mehrlagige Kunststofffolienstreifen (106, 108) des Verstärkungsbereichs, eine nicht geschäumte Polyethylenfolie, insbesondere eine nicht geschäumte LD-Polyethylenfolie, darstellt.

19. Kunststofftragetasche (1) nach einem der vorangehenden Ansprüche, **dadurch gekennzeichnet, dass**

die ersten Verbindungsbereiche (52, 52') jeweils mit den zweiten Verbindungsbereichen (54, 54'), insbesondere unter Ausbildung eines einheitlichen Verbindungsbereichs (55, 55'), überlappen.

**Fig. 1**

**Fig. 2**

**Fig. 3**

**Fig. 4**

**Fig. 5**

*Fig. 6*

**Fig. 7**

**Fig. 8**

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10116920 A1
- WO 0151372 A1
- DE 4012897 A1